# EUROPÄISCHE PATENTANMELDUNG

(11) **EP 3 618 469 A1**
(43) Veröffentlichungstag der Anmeldung: **04.03.2020**
(21) Anmeldenummer: 18191533.1
(22) Anmeldetag: 29.08.2018
(51) Int. Cl.: H04W 4/44, H04W 4/40, H04L 29/08, H04L 29/14, H04W 24/04, H04W 48/08, H04L 12/26, H04L 29/06, H04W 12/06, H04W 84/04, H04W 84/10, H04W 84/12, H04W 88/08, H04W 88/06, H04W 88/16, H04W 84/18, B62D 63/06

(54) **VORRICHTUNG UND VERFAHREN ZUM AUFBAUEN EINES ZWEITEN KOMMUNIKATIONSPFADS**

(71) Anmelder: Schmitz Cargobull AG, 48341 Altenberge (DE)
(72) Erfinder: Schulte-Jokiel, Nils, 48147 Münster (DE); Klütz, Karsten, 46395 Bocholt (DE); Honkomp, Dieter, 49439 Steinfeld (DE)
(74) Vertreter: Cohausz & Florack

(57) **Zusammenfassung**

Es wird unter anderem ein Verfahren offenbart, das durch eine Vorrichtung ausgeführt wird, das Verfahren umfassend:
- Aufbauen und/oder Bewirken des Aufbauens eines ersten Kommunikationspfads zwischen der Vorrichtung und einer Telematikvorrichtung zum Senden von Nutzfahrzeug-Steuerinformationen und/oder zum Empfangen von Telematikinformationen;
- Empfangen von Kommunikationspfadaufbauinformationen zum Aufbauen eines zweiten Kommunikationspfads von der Telematikvorrichtung über den ersten Kommunikationspfad;
- Bestimmen, ob der erste Kommunikationspfad unterbrochen ist;
- wenn bestimmt wird, dass der erste Kommunikationspfad unterbrochen ist, Aufbauen und/oder Bewirken des Aufbauens des zweiten Kommunikationspfads zum Senden von Nutzfahrzeug-Steuerinformationen und/oder zum Empfangen von Telematikinformationen zumindest teilweise basierend auf den Kommunikationspfadaufbauinformationen.

## Beschreibung

### Gebiet der Erfindung

Beispielhafte Ausführungsformen der Erfindung betreffen den Aufbau eines zweiten Kommunikationspfads zum Senden von Nutzfahrzeug-Steuerinformationen und/oder zum Empfangen von Telematikinformationen.

### Hintergrund der Erfindung

Im Stand der Technik ist bekannt, eine Verbindung in einem lokalen drahtlosen Kommunikationsnetzwerk zur Datenübertragung zwischen einer Vorrichtung, beispielsweise einer tragbaren Vorrichtung, und einer Telematikvorrichtung eines Nutzfahrzeugs zu nutzen, zum Beispiel für die Übertragung von Nutzfahrzeug-Steuerinformationen oder Telematikinformationen. Der Austausch von Informationen über ein solches lokales drahtloses Kommunikationsnetzwerk ist typischerweise störanfällig und beispielsweise abhängig von den - während der Fahrt - häufig wechselnden Umgebungsbedingungen (wie beispielsweise Störungen durch andere in der Nähe befindliche lokale drahtlose Kommunikationsnetzwerke und/oder der Anwesenheit oder Abwesenheit von geeigneten Reflektoren in der Umgebung des Nutzfahrzeugs). Eine Unterbrechung der Verbindung hat unter anderem folgende Konsequenzen:
- Es ist keine Datenübertragung möglich.
   - Ein Benutzer muss evtl. manuell Nutzfahrzeug-Steuerinformationen an einer Benutzerschnittstelle der Telematikvorrichtung eingeben oder Telematikinformationen auf der Benutzerschnittstelle der Telematikvorrichtung ablesen. Dies ist insbesondere dann umständlich, wenn sich die Telematikvorrichtung außerhalb der Fahrzeugkabine beispielsweise in einem Anhänger oder einem Sattelauflieger befindet.

### Zusammenfassung einiger beispielhafter Ausgestaltungen der vorliegenden Erfindung

Eine Aufgabe der vorliegenden Erfindung ist es deshalb, die oben genannten Nachteile zu überwinden.

Diese Aufgabe wird gelöst durch den Gegenstand der unabhängigen Ansprüche. Vorteilhafte beispielhafte Ausgestaltungen der Erfindung sind den Unteransprüchen zu entnehmen.

Gemäß einem ersten Aspekt der Erfindung wird ein Verfahren offenbart, ausgeführt durch eine Vorrichtung, das Verfahren umfassend:
- Aufbauen und/oder Bewirken des Aufbauens eines ersten Kommunikationspfads zwischen der Vorrichtung und einer Telematikvorrichtung zum Senden von Nutzfahrzeug-Steuerinformationen und/oder zum Empfangen von Telematikinformationen;
- Empfangen von Kommunikationspfadaufbauinformationen zum Aufbauen eines zweiten Kommunikationspfads von der Telematikvorrichtung über den ersten Kommunikationspfad;
- Bestimmen, ob der erste Kommunikationspfad unterbrochen ist;
- wenn bestimmt wird, dass der erste Kommunikationspfad unterbrochen ist, Aufbauen und/oder Bewirken des Aufbauens des zweiten Kommunikationspfads zum Senden von Nutzfahrzeug-Steuerinformationen und/oder zum Empfangen von Telematikinformationen zumindest teilweise basierend auf den Kommunikationspfadaufbauinformationen.

Gemäß dem ersten Aspekt der Erfindung wird ferner eine Vorrichtung, insbesondere ein tragbares Gerät, offenbart, wobei die Vorrichtung eingerichtet ist zur Ausführung und/oder Steuerung des Verfahrens gemäß dem ersten Aspekt der Erfindung oder umfassend jeweilige Mittel zur Ausführung und/oder Steuerung der Schritte des Verfahrens gemäß dem ersten Aspekt der Erfindung. Dabei können entweder alle Schritte des Verfahrens von den Mitteln gesteuert werden, oder alle Schritte des Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden. Die Mittel können Hardware- und/oder Software-Komponenten umfassen.

Die Mittel können beispielsweise mindestens einen Speicher mit Programmanweisungen eines Computerprogramms (z.B. des unten offenbarten Computerprogramms gemäß dem ersten Aspekt der Erfindung) und mindestens einen Prozessor ausgebildet zum Ausführen von Programmanweisungen aus dem mindestens einen Speicher umfassen. Dementsprechend soll gemäß dem ersten Aspekt der Erfindung auch eine Vorrichtung, insbesondere ein tragbares Gerät, als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das Verfahren gemäß dem ersten Aspekt der Erfindung auszuführen und/oder zu steuern.

Alternativ oder zusätzlich können die Mittel ferner eine oder mehrere Kommunikationsschnittstellen (z.B. einen oder mehrere drahtlose und/oder drahtgebundene Netzwerkschnittstellen wie einen oder mehrere Netzwerkadapter) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die Vorrichtung gemäß dem ersten Aspekt der Erfindung auch andere nicht aufgeführte Mittel umfassen kann.

Die Vorrichtung, insbesondere ein tragbares Gerät, gemäß dem ersten Aspekt der Erfindung entspricht beispielsweise der Vorrichtung in dem Verfahren gemäß dem ersten Aspekt der Erfindung.

Gemäß dem ersten Aspekt der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die Vorrichtung gemäß dem ersten Aspekt der Erfindung) zu veranlassen, das Verfahren gemäß dem ersten Aspekt auszuführen.

Das Computerprogramm gemäß dem ersten Aspekt der Erfindung ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Gemäß einem zweiten Aspekt der Erfindung wird ein Verfahren, ausgeführt durch eine Telematikvorrichtung, offenbart, das Verfahren umfassend:
- Aufbauen und/oder Bewirken des Aufbauens eines ersten Kommunikationspfads zwischen der Telematikvorrichtung und einer Vorrichtung zum Empfangen von Nutzfahrzeug-Steuerinformationen und/oder zum Senden von Telematikinformationen;
- Bestimmen und/oder Empfangen von Kommunikationspfadaufbauinformationen zum Aufbauen eines zweiten Kommunikationspfads durch die Vorrichtung zumindest teilweise basierend auf den Kommunikationspfadaufbauinformationen;
- Senden der Kommunikationspfadaufbauinformationen an die Vorrichtung über den ersten Kommunikationspfad.

Gemäß dem zweiten Aspekt der Erfindung wird ferner eine Telematikvorrichtung, insbesondere eine Telematikvorrichtung für ein Nutzfahrzeug, offenbart, wobei die Telematikvorrichtung eingerichtet ist zur Ausführung und/oder Steuerung des Verfahrens gemäß dem zweiten Aspekt der Erfindung oder umfassend jeweilige Mittel zur Ausführung und/oder Steuerung der Schritte des Verfahrens gemäß dem zweiten Aspekt der Erfindung. Dabei können entweder alle Schritte des Verfahrens von den Mitteln gesteuert werden, oder alle Schritte des Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden. Die Mittel können Hardware- und/oder Software-Komponenten umfassen.

Die Mittel können beispielsweise mindestens einen Speicher mit Programmanweisungen eines Computerprogramms (z.B. des unten offenbarten Computerprogramms gemäß dem zweiten Aspekt der Erfindung) und mindestens einen Prozessor ausgebildet zum Ausführen von Programmanweisungen aus dem mindestens einen Speicher umfassen. Dementsprechend soll gemäß dem zweiten Aspekt der Erfindung auch eine Telematikvorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Telematikvorrichtung zu veranlassen, das Verfahren gemäß dem zweiten Aspekt der Erfindung auszuführen und/oder zu steuern.

Alternativ oder zusätzlich können die Mittel ferner eine oder mehrere Kommunikationsschnittstellen (z.B. einen oder mehrere drahtlose und/oder drahtgebundene Netzwerkadapter) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die Telematikvorrichtung gemäß dem zweiten Aspekt der Erfindung auch andere nicht aufgeführte Mittel umfassen kann.

Die Telematikvorrichtung, insbesondere eine Telematikvorrichtung für ein Nutzfahrzeug, gemäß dem zweiten Aspekt der Erfindung entspricht beispielsweise der Telematikvorrichtung in dem Verfahren gemäß dem zweiten Aspekt der Erfindung.

Gemäß dem zweiten Aspekt der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die Telematikvorrichtung, insbesondere eine Telematikvorrichtung für ein Nutzfahrzeug, gemäß dem zweiten Aspekt der Erfindung) zu veranlassen, das Verfahren gemäß dem zweiten Aspekt auszuführen.

Das Computerprogramm gemäß dem zweiten Aspekt der Erfindung ist beispielsweise auf einem computerlesbaren Speichermedium enthalten und/oder gespeichert.

Gemäß einem dritten Aspekt der Erfindung wird ein Verfahren, ausgeführt durch einen Telematikserver, offenbart, das Verfahren umfassend:
- Empfangen von Telematikinformationen von einer Telematikvorrichtung über einen dritten Kommunikationspfad;
- Aufbauen und/oder Bewirken des Aufbauens eines zweiten Kommunikationspfades zwischen dem Telematikserver und einer Vorrichtung.

Gemäß dem dritten Aspekt der Erfindung wird ferner ein Telematikserver offenbart, wobei der Telematikserver eingerichtet ist zur Ausführung und/oder Steuerung des Verfahrens gemäß dem dritten Aspekt der Erfindung oder umfassend jeweilige Mittel zur Ausführung und/oder Steuerung der Schritte des Verfahrens gemäß dem dritten Aspekt der Erfindung. Dabei können entweder alle Schritte des Verfahrens von den Mitteln gesteuert werden, oder alle Schritte des Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden. Die Mittel können Hardware- und/oder Software-Komponenten umfassen.

Die Mittel können beispielsweise mindestens einen Speicher mit Programmanweisungen eines Computerprogramms (z.B. des unten offenbarten Computerprogramms gemäß dem zweiten Aspekt der Erfindung) und mindestens einen Prozessor ausgebildet zum Ausführen von Programmanweisungen aus dem mindestens einen Speicher umfassen. Dementsprechend soll gemäß dem dritten Aspekt der Erfindung auch ein Telematikserver als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, den Telematikserver zu veranlassen, das Verfahren gemäß dem dritten Aspekt der Erfindung auszuführen und/oder zu steuern.

Alternativ oder zusätzlich können die Mittel ferner eine oder mehrere Kommunikationsschnittstellen (z.B. einen oder mehrere drahtlose und/oder drahtgebundene Netzwerkadapter) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass der Telematikserver gemäß dem dritten Aspekt der Erfindung auch andere nicht aufgeführte Mittel umfassen kann.

Der Telematikserver gemäß dem dritten Aspekt der Erfindung entspricht beispielsweise dem Telematikserver in dem Verfahren gemäß dem dritten Aspekt der Erfindung.

Gemäß dem dritten Aspekt der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. den Telematikserver gemäß dem dritten Aspekt der Erfindung) zu veranlassen, das Verfahren gemäß dem dritten Aspekt auszuführen.

Das Computerprogramm gemäß dem dritten Aspekt der Erfindung ist beispielsweise auf einem computerlesbaren Speichermedium enthalten und/oder gespeichert.

Die Aspekte der Erfindung betreffen dienen dem Aufbau eines zweiten Kommunikationspfads zum Senden von Nutzfahrzeug-Steuerinformationen von der Vorrichtung und/oder zum Empfangen von Telematikinformationen an der Vorrichtung. Dies ist insbesondere dann vorteilhaft, wenn der erste Kommunikationspfad zwischen der Vorrichtung und der Telematikvorrichtung unterbrochen ist. In diesem Fall kann der zweite Kommunikationspfad als Rückfalloption dienen.

Der erste Aspekt der Erfindung betrifft die Erfindung von Seiten der Vorrichtung; und der zweite Aspekt der Erfindung betrifft die Erfindung von Seiten der Telematikvorrichtung; und der dritte Aspekt der Erfindung betrachtet die Erfindung von Seiten des Telematikservers. Die Offenbarungen des ersten Aspekts, des zweiten Aspekts und des dritten Aspekts korrespondieren somit zueinander. Dementsprechend soll die Offenbarung eines für einen Aspekt der Erfindung offenbarten Merkmals - soweit sinnvoll - auch als Offenbarung eines korrespondierenden Merkmals eines oder mehrerer der weiteren Aspekte der Erfindung gelten. Insbesondere sollen die folgenden Offenbarungen betreffend den ersten, zweiten und dritten Kommunikationspfad sowie die Telematikvorrichtung, den Telematikserver und die Vorrichtung gleichermaßen für alle Aspekte der Erfindung gültig sein.

Im Folgenden werden die Eigenschaften der Verfahren gemäß den Aspekten der Erfindung, der Vorrichtungen gemäß den Aspekten der Erfindung, der Computerprogramme gemäß den Aspekten der Erfindung - teilweise beispielhaft - beschrieben.

Ein Nutzfahrzeug ist zum Beispiel ein Lastkraftwagen, ein Anhänger oder ein Sattelauflieger. Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern.

Eine Telematikvorrichtung (z.B. die Telematikvorrichtung gemäß dem zweiten Aspekt der Erfindung) ist beispielsweise eingerichtet zum Erfassen von Zustandsinformationen des Nutzfahrzeugs, die einen Zustand des Nutzfahrzeugs repräsentieren (z.B. in Form von für den Zustand charakteristischen Zustandsinformationen wie einen durch einen Sensor erfassten Messwert). Beispiele für einen Zustand des Nutzfahrzeugs sind: Tankfüllstand, Reifendruck (z.B. eines oder mehrerer Reifen des Nutzfahrzeugs), Feuchtigkeit (z.B. Umgebungsluftfeuchtigkeit in einem oder mehreren Laderäumen des Nutzfahrzeugs), Temperatur (z.B. Umgebungstemperatur in einem oder mehreren Laderäumen des Nutzfahrzeugs), Türöffnungs- und -schließzustand (z.B. eine oder mehrere Türen des Nutzfahrzeugs) und/oder Position des Nutzfahrzeugs. Dementsprechend sind Beispiele für solche Zustandsinformationen: Tankfüllstandinformationen, Reifendruckinformationen, Feuchtigkeitsinformationen, Temperaturinformationen, Türöffnungs- und -schließinformationen und/oder Positionsinformationen. Zum Beispiel kann die Telematikvorrichtung diese Zustandsinformationen durch entsprechende Sensoren erfassen und/oder von entsprechenden Sensoren empfangen.

Ferner ist die Telematikvorrichtung beispielsweise eingerichtet zum Senden der erfassten Zustandsinformationen als Telematikinformationen an einen Telematikserver (z.B. den Telematikserver gemäß dem dritten Aspekt der Erfindung). Gemäß dem dritten Aspekt der Erfindung empfängt der Telematikserver über einen dritten Kommunikationspfad Telematikinformationen von der Telematikvorrichtung.

Ein Telematikserver ist beispielsweise ein Server eines Telematikdienstes. Zum Beispiel stellt der Telematikserver eine Benutzeroberfläche zum Zugriff auf Telematikinformationen (z.B. Zustandsinformationen eines oder mehrerer Nutzfahrzeuge) über das Internet bereit. Ein Benutzer kann unter anderem über eine Benutzeroberfläche des Telematikservers die Telematikvorrichtung konfigurieren.

Unter der Vorrichtung (z.B. der Vorrichtung gemäß dem ersten Aspekt der Erfindung) soll beispielsweise ein tragbares Gerät wie ein tragbares Benutzergerät (z.B. ein Mobiltelefon, eine Smartwatch, ein persönlicher digitaler Assistent, ein tragbares Navigationsgerät, ein Tabletcomputer und/oder ein Laptopcomputer) verstanden werden. Die Vorrichtung kann jedoch auch Teil eines Nutzfahrzeugs wie beispielsweise eines Nutzfahrzeugbordcomputers oder eines Nutzfahrzeugnavigationssystems sein.

Ein Kommunikationspfad beschreibt beispielsweise den Übertragungsweg, über den Daten (z.B. Informationen wie Nutzfahrzeug-Steuerinformationen oder Telematikinformationen) zwischen zwei Vorrichtungen übertragen werden können. Unter einem Kommunikationspfad soll sowohl ein direkter Übertragungsweg zwischen zwei Vorrichtungen als auch ein indirekter Übertragungsweg zwischen zwei Vorrichtungen mit einer oder mehreren Zwischenstationen verstanden werden. Die Datenübertragung über einen solchen Kommunikationspfad kann gemäß einem oder mehreren standardisierten Kommunikationsprotokollen, zum Beispiel verbindungsorientierten und/oder verbindungslosen Kommunikationsprotokollen erfolgen. Neben einem Kommunikationspfad mit ausschließlich drahtlosen Abschnitten soll unter einem drahtlosen Kommunikationspfad beispielsweise auch ein Kommunikationspfad verstanden werden, der zumindest einen drahtlosen Abschnitt und zumindest einen drahtgebundenen Abschnitt umfasst.

Beispielsweise soll unter einem Kommunikationspfad zwischen zwei Vorrichtungen eine Netzwerkverbindung über ein oder mehrere drahtlose und/oder drahtgebundene Kommunikationsnetzwerke (z.B. ein oder mehrere Kommunikationsnetzwerke gemäß einem oder mehreren standardisierten Kommunikationsprotokollen) zwischen diesen beiden Vorrichtungen verstanden werden. Unter dem Aufbauen eines Kommunikationspfads zwischen zwei Vorrichtungen (z.B. der Vorrichtung gemäß dem ersten Aspekt und der Telematikvorrichtung gemäß dem zweiten Aspekt oder der Vorrichtung gemäß dem ersten Aspekt und dem Telematikserver gemäß dem dritten Aspekt) soll beispielsweise das Aushandeln (z.B. durch den Austausch entsprechender Anfrage- und Antwortnachrichten zwischen den beiden Vorrichtungen) und/oder Herstellen und/oder das Unterstützen des Aushandelns und/oder Herstellens einer Netzwerkverbindung über ein oder mehrere Kommunikationsnetzwerke (z.B. gemäß einem oder mehreren standardisierten Kommunikationsprotokollen) zwischen diesen beiden Vorrichtungen verstanden werden. Zum Beispiel umfasst das Aufbauen eines Kommunikationspfads zwischen zwei Vorrichtung das Authentisieren einer oder beider Vorrichtungen. Das Bewirken des Aufbauens eines Kommunikationspfads zwischen zwei Vorrichtungen kann beispielsweise als Starten des Aushandelns und/oder Herstellens einer Netzwerkverbindung über ein oder mehrere Kommunikationsnetzwerke (z.B. gemäß einem oder mehreren standardisierten Kommunikationsprotokollen) zwischen diesen beiden Vorrichtungen verstanden werden.

Alternativ kann ein Kommunikationspfad zwischen zwei Vorrichtungen auch ohne das Aushandeln und/oder Herstellen einer Netzwerkverbindung über ein oder mehrere Kommunikationsnetzwerke aufgebaut oder das Aufbauen bewirkt werden, beispielsweise indem eine (z.B. verbindungslose) Datenübertragung zwischen beiden Vorrichtungen gestartet wird.

Die Datenübertragung über einen Kommunikationspfad erfolgt durch ein oder mehrere Signale, die die zu übertragenden Daten (z.B. Nachrichten und/oder Informationen wie Nutzfahrzeug-Steuerinformationen oder Telematikinformationen) repräsentieren und sich entlang des Kommunikationspfads ausbreiten. Dementsprechend soll unter dem Senden von Daten über einen Kommunikationspfad verstanden werden, dass ein oder mehrere solcher Signale, die die die Daten repräsentieren, gesendet werden; und unter dem Empfangen von Daten (z.B. Nachrichten und/oder Informationen wie Nutzfahrzeug-Steuerinformationen oder Telematikinformationen) über einen Kommunikationspfad soll verstanden werden, dass ein oder mehrere solcher Signale, die die Daten repräsentieren, empfangen werden. Ein Beispiel für drahtlose Signale zur Datenübertragung über einen drahtlosen Kommunikationspfad sind Funksignale; und ein Beispiel für drahtgebundene Signale zur Datenübertragung über einen drahtgebundenen Kommunikationspfad sind elektrische Signale. Zum Senden und Empfangen entsprechender Signale können die Vorrichtungen gemäß dem ersten Aspekt der Erfindung, die Telematikvorrichtung gemäß dem zweiten Aspekt der Erfindung und/oder der Telematikserver gemäß dem dritten Aspekt der Erfindung entsprechende Kommunikationsmittel wie eine Senderschaltung, eine Empfängerschaltung oder eine Sender-Empfängerschaltung (z.B. als Teil einer Kommunikations- und/oder Netzwerkschnittstelle) aufweisen.

Gemäß dem ersten Aspekt und dem zweiten Aspekt der Erfindung wird ein erster Kommunikationspfad zwischen der Vorrichtung und der Telematikvorrichtung aufgebaut und/oder das Aufbauen eines ersten Kommunikationspfads bewirkt.

Der erste Kommunikationspfad zwischen der Vorrichtung und der Telematikvorrichtung dient zum Senden von Nutzfahrzeug-Steuerinformationen von der Vorrichtung an die Telematikvorrichtung und zum Senden von Telematikinformationen von der Telematikvorrichtung an die Vorrichtung.

Zum Beispiel können Telematikinformationen eine oder mehrere Zustandsinformationen eines Nutzfahrzeugs enthalten und/oder repräsentieren. Wie oben offenbart, sind beispielhafte Zustandsinformationen eines Nutzfahrzeugs: Tankfüllstandinformationen, Reifendruckinformationen, Feuchtigkeitsinformationen, Temperaturinformationen, Türöffnungs- und -schließinformationen und/oder Positionsinformationen.

Die Nutzfahrzeug-Steuerinformationen sind beispielsweise eingerichtet, das Nutzfahrzeug derart zu steuern, dass es eine durch die Nutzfahrzeug-Steuerinformationen vorgegebene Aktion ausführt. Zum Beispiel kann eine solche Aktion ein Setzen eines Soll- oder Zielwerts eines durch eine Komponente des Nutzfahrzeugs überwachten (z.B. durch einen Sensor) und/oder geregelten (z.B. durch einen Regelkreis) Zustand des Nutzfahrzeugs und/oder das Aktivieren und/oder Deaktivieren einer Komponente des Nutzfahrzeugs (z.B. einer Kältemaschine) sein. Beispielsweise kann durch Nutzfahrzeug-Steuerinformationen ein Temperatursoll- oder -zielwert für eine Temperaturregelungskomponente (z.B. eine Kältemaschine) des Nutzfahrzeugs gesetzt und/oder die Temperaturregelungskomponente aktiviert und/oder deaktiviert werden und/oder eine Schließsystemkomponente des Nutzfahrzeugs gesteuert (z.B. aktiviert und/oder deakltiviert) werden.

Gemäß dem ersten Aspekt der Erfindung werden Kommunikationspfadaufbauinformationen von der Telematikvorrichtung über den ersten Kommunikationspfad an der Vorrichtung empfangen. Hierzu korrespondierend werden die Kommunikationspfadaufbauinformationen gemäß dem zweiten Aspekt der Erfindung von der Telematikvorrichtung über den ersten Kommunikationspfad an die Vorrichtung gesendet.

Die Kommunikationspfadaufbauinformationen dienen zum Aufbauen eines zweiten Kommunikationspfads. Dies soll beispielsweise derart verstanden werden, dass die Kommunikationspfadaufbauinformationen eine oder mehrere Informationen zum Aufbauen des zweiten Kommunikationspfads enthalten und/oder repräsentieren. Solche Kommunikationspfadaufbauinformationen sind beispielsweise eine oder mehrere Informationen, die für den Aufbau des zweiten Kommunikationspfads durch die Vorrichtung notwendig sind und/oder den Aufbau des zweiten Kommunikationspfads durch die Vorrichtung erleichtern. Dies ist beispielsweise vorteilhaft, um die Vorrichtung in die Lage zu versetzen, den zweiten Kommunikationspfad aufbauen zu können, und den Aufbau des zweiten Kommunikationspfads möglichst effizient gestalten zu können.

Die Kommunikationspfadaufbauinformationen werden durch die Telematikvorrichtung zumindest teilweise bestimmt und/oder empfangen.

Unter dem Bestimmen der Kommunikationspfadaufbauinformationen soll beispielsweise verstanden werden, dass die Kommunikationspfadinformationen erzeugt werden. Das Bestimmen der Kommunikationspfadaufbauinformationen kann beispielsweise zumindest teilweise basierend auf vorgegebenen Regeln erfolgen.

Unter dem Empfangen der Kommunikationspfadaufbauinformationen soll beispielsweise verstanden werden, dass die Kommunikationspfadaufbauinformationen von dem Telematikserver über den dritten Kommunikationspfad empfangen werden. In diesem Fall kann beispielsweise der Telematikserver die Kommunikationspfadaufbauinformationen zum Aufbauen des zweiten Kommunikationspfads bestimmen.

Es versteht sich, dass auch vorgesehen sein kann, dass die Telematikvorrichtung einen Teil der Kommunikationspfadinformationen bestimmt (z.B. erzeugt) und einen anderen Teil der Kommunikationspfadinformationen empfängt (z.B. von dem Telematikserver empfängt).

Das Bestimmen, ob der erste Kommunikationspfad zwischen der Vorrichtung und der Telematikvorrichtung unterbrochen ist, kann gemäß dem ersten Aspekt der Erfindung beispielsweise zumindest teilweise basierend auf vorgegebenen Regeln erfolgen. Die Regeln können beispielsweise vorgeben, wann und/oder wie bestimmt werden soll, dass der erste Kommunikationspfad unterbrochen ist. Zum Beispiel können die Regeln vorgeben, dass bestimmt werden soll, dass der erste Kommunikationspfad zwischen der Vorrichtung und der Telematikvorrichtung unterbrochen ist, wenn keine Datenübertragung über den ersten Kommunikationspfad oder lediglich mit einer Datenübertragungsrate unterhalb eines vorgegebenen Schwellwerts (z.B. 500 kBit/s oder 125 kBit/s oder 10kBit/s) möglich ist. Alternativ oder zusätzlich können die Regeln vorgeben, dass bestimmt werden soll, dass der erste Kommunikationspfad zwischen der Vorrichtung und der Telematikvorrichtung unterbrochen ist, wenn die Antwortzeit auf eine über den ersten Kommunikationspfad von der Vorrichtung an die Telematikvorrichtung gesendeten Anfrage (z.B. einem sogenannten Ping) einen vorgegebenen Schwellwert (z.B. 500 ms oder 1.000 ms oder 10.000 ms) überschreitet.

Gemäß dem ersten Aspekt der Erfindung wird von der Vorrichtung zumindest teilweise basierend auf den Kommunikationspfadaufbauinformationen ein zweiter Kommunikationspfad aufgebaut und/oder der Aufbau eines solchen zweiten Kommunikationspfads bewirkt, wenn bestimmt wird, dass der erste Kommunikationspfad unterbrochen ist. Dies ist beispielsweise vorteilhaft, wenn der erste Kommunikationspfad zwischen der Vorrichtung und der Telematikvorrichtung unterbrochen ist In diesem Fall kann der zweite Kommunikationspfad als Rückfalloption dienen. Dass das Aufbauen und/oder das Bewirken des Aufbauens des zweiten Kommunikationspfads zumindest teilweise auf den Kommunikationspfadaufbauinformationen basiert ist beispielsweise vorteilhaft, weil auf diese Weise der zweite Kommunikationspfad sicher und effizient aufgebaut werden kann. Darüber hinaus ist gewährleistet, dass die Vorrichtung nur dann den zweiten Kommunikationspfad aufbauen kann oder den Aufbau bewirken kann, wenn die Vorrichtung vorher die Kommunikationspfadaufbauinformationen über den ersten Kommunikationspfad von der Telematikvorrichtung empfangen hat und demzufolge zum Datenaustausch mit der Telematikvorrichtung berechtigt gewesen sein muss.

Dass das Aufbauen und/oder das Bewirken des Aufbauens des zweiten Kommunikationspfads durch die Vorrichtung zumindest teilweise auf den Kommunikationspfadaufbauinformationen basiert, soll beispielsweise so verstanden werden, dass die Kommunikationspfadaufbauinformationen beim Aufbau des zweiten Kommunikationspfads berücksichtigt werden.

Der zweite Kommunikationspfad zwischen der Vorrichtung und der Telematikvorrichtung dient beispielsweise zum Senden von Nutzfahrzeug-Steuerinformationen, die für die Telematikvorrichtung bestimmt sind, von der Vorrichtung und zum Senden von Telematikinformationen, die von der Telematikvorrichtung stammen, an die Vorrichtung.

Dabei sollen als Telematikinformationen, die von der Telematikvorrichtung stammen, beispielsweise Telematikinformationen, die durch die Vorrichtung unmittelbar von der Telematikvorrichtung empfangen werden und auch Telematikinformationen, die eine andere Vorrichtung wie der Telematikserver von der Telematikvorrichtung empfangen hat, und von dieser anderen Vorrichtung an der Vorrichtung empfangen werden, verstanden werden.

Dementsprechend sind Nutzfahrzeug-Steuerinformationen, die für die Telematikvorrichtung bestimmt sind, beispielsweise Nutzfahrzeug-Steuerinformation, die die Vorrichtung unmittelbar an die Telematikvorrichtung sendet, als auch Nutzfahrzeug-Steuerinformationen, die die Vorrichtung an eine andere Vorrichtung wie den Telematikserver sendet, damit diese andere Vorrichtung die Nutzfahrzeug-Steuerinformationen an die Telematikvorrichtung sendet.

Der zweite Kommunikationspfad kann beispielsweise ein von dem ersten Kommunikationspfad verschiedener Kommunikationspfad zwischen der Vorrichtung und der Telematikvorrichtung sein. Dies ist beispielsweise vorteilhaft, weil der zweite Kommunikationspfad zwischen der Vorrichtung und der Telematikvorrichtung somit nicht zwingend betroffen sein muss von den Umständen, die ein Unterbrechen des ersten Kommunikationspfads verursachen. Demzufolge kann beispielsweise der zweite Kommunikationspfad als Rückfalloption weiterhin zur Datenübertragung zwischen der Vorrichtung und der Telematikvorrichtung dienen, während der erste Kommunikationspfad unterbrochen ist. Dass der zweite Kommunikationspfad unmittelbar zwischen der Vorrichtung und der Telematikvorrichtung besteht ist beispielsweise vorteilhaft, um eine möglichst unkomplizierte, effiziente, und vor dem Zugriff Dritter geschützte Datenübertragung mit geringem Aufwand zu ermöglichen.

Alternativ kann es sich bei dem zweiten Kommunikationspfad jedoch auch um einen (von dem ersten Kommunikationspfad verschiedenen) Kommunikationspfad zwischen der Vorrichtung und einer von der Telematikvorrichtung verschiedenen Vorrichtung wie dem Telematikserver handeln. Dies ist beispielsweise vorteilhaft, weil der zweite Kommunikationspfad zwischen der Vorrichtung und der von der Telematikvorrichtung verschiedenen Vorrichtung, beispielsweise dem Telematikserver, somit nicht zwingend betroffen sein muss von den Umständen, die ein Unterbrechen des ersten Kommunikationspfads verursacht haben. Demzufolge kann beispielsweise der zweite Kommunikationspfad als Rückfalloption weiterhin zur Datenübertragung zwischen der Vorrichtung und der von der Telematikvorrichtung verschiedenen Vorrichtung, beispielsweise dem Telematikserver, dienen, während der erste Kommunikationspfad unterbrochen ist. Diese Ausführungsform ist insbesondere dann vorteilhaft, wenn der dritte Kommunikationspfad zwischen der Telematikvorrichtung und dem Telematikserver ohnehin besteht, z.B. damit der Telematikserver eine Benutzeroberfläche zum Zugriff auf Telematikinformationen bereitstellen kann. Denn in diesen Fall kann dieser dritte Kommunikationspfad als Rückfalloption für eine Datenübertragung zwischen der Vorrichtung und der Telematikvorrichtung genutzt werden, ohne dass Änderungen an der Hardware der Telematikvorrichtung vorgenommen werden müssen.

In beispielhaften Ausführungsformen der verschiedenen Aspekte der Erfindung enthalten oder repräsentieren die Kommunikationspfadaufbauinformationen eine Kommunikationspfadauthentisierungsschlüsselinformation und/oder eine Telematikvorrichtungsidentifizierungsinformation.

Die Telematikvorrichtung ist beispielsweise basierend auf der Telematikvorrichtungsidentifizierungsinformation mittelbar oder unmittelbar identifizierbar. Zum Beispiel repräsentiert die Telematikvorrichtungidentifizierungsinformation eine Kennung der Telematikvorrichtung. Ein Beispiel für eine solche Kennung ist eine Seriennummer, eine ID-Nummer (z.B. eine Telematik-ID), eine Adresse (z.B. eine MAC-Adresse (Media-Access-Control), eine IP-Adresse (Internet Protocol)) und/oder ein Name (z.B. ein Netzwerkname) der Telematikvorrichtung.

Beispielsweise enthält oder repräsentiert die Kommunikationspfadauthentisierungsschlüsselinformation einen Autorisierungsschlüssel. Unter einem Autorisierungsschlüssel soll beispielsweise ein Schlüssel verstanden werden, der die Vorrichtung zum Aufbauen des zweiten Kommunikationspfades autorisiert und/oder mit dem die Vorrichtung nachweisen kann, dass Sie zum Aufbauen des zweiten Kommunikationspfades autorisiert ist Zum Beispiel kann das Bestimmen des Autorisierungsschlüssels gemäß vorgegebenen Regeln wie einem vorgegebenen Schlüsselerzeugungsalgorithmus erfolgen. Zum Beispiel kann vorgegeben sein, dass der Autorisierungsschlüssel zumindest teilweise basierend auf einer Zufallszahl und/oder einem Algorithmus zum Erzeugen einer Zufallszahl oder einer Pseudozufallszahl bestimmt wird.

Es kann auch vorgesehen sein, dass der Autorisierungsschlüssel selber nicht in der Kommunikationspfadauthentisierungsschlüsselinformation enthalten und/oder dadurch repräsentiert wird. In diesem Fall kann der Autorisierungsschlüssel beispielsweise gemäß einem vorgegebenen kryptographischen Algorithmus zumindest teilweise basierend auf der Kommunikationspfadauthentisierungsschlüsselinformation bestimmt werden. Ein Beispiel für einen solchen kryptographischen Algorithmus ist beispielsweise ein PBKDF-Algorithmus (Password-Based Key Derivation Function). In der RFC 2898-Spezifikation der IETF (www.ietf.org) sind beispielsweise die Algorithmen PBKDF1 und PBKDF2 veröffentlicht.

Ferner können die Kommunikationspfadaufbauinformationen eine Kommunikationspfadverschlüsselungsinformation enthalten und/oder repräsentieren. Darunter soll beispielsweise eine Information verstanden werden, die den Aufbau eines gesicherten Kommunikationspfads gemäß einem Verschlüsselungsprotokoll erlaubt Beispiele für ein solches Verschlüsselungsprotokoll sind das Transport Layer Security Protokoll (TLS) oder das Secure Sockets Layer Protokoll (SSL). Die Spezifikationen dieser Protokolle sind derzeit im Internet unter www.ietf.org erhältlich.

Die Telematikvorrichtungsidentifizierungsinformation, die Kommunikationspfadauthentisierungsschlüsselinformation und/oder die Kommunikationspfadverschlüsselungsinformation können zumindest teilweise in einem Speicher der Telematikvorrichtung gespeichert sein. Das Bestimmen der Kommunikationspfadinformationen kann dementsprechend beispielsweise das Lesen der jeweilige Information aus dem Speicher der Telematikvorrichtung umfassen. Es ist auch denkbar, dass die Telematikvorrichtungsidentifizierungsinformation, die Kommunikationspfadauthentisierungsschlüsselinformation und/oder die Kommunikationspfadverschlüsselungsinformation beim Bestimmen der Kommunikationspfadinformationen durch die Telematikvorrichtung zmindest teilweise gemäß vorgegebenen Regeln erzeugt werden. Ferner könnten die Telematikvorrichtungsidentifizierungsinformation, die Kommunikationspfadauthentisierungsschlüsselinformation und/oder die Kommunikationspfadverschlüsselungsinformation zumindest teilweise durch den Telematikserver erzeugt und an die Telematikvorrichtung gesendet werden, so dass sie an der Telematikvorrichtung empfangen werden.

In beispielhaften Ausführungsformen der verschiedenen Aspekte der Erfindung wird der zweite Kommunikationspfad zwischen der Vorrichtung und dem Telematikserver aufgebaut

Zum Beispiel umfasst das Verfahren gemäß dem ersten Aspekt als Teil des Aufbauens des zweiten Kommunikationspfads:
- Senden einer Kommunikationspfadaufbauanfragenachricht zumindest teilweise basierend auf der Kommunikationspfadaufbauinformation an den Telematikserver;
und das Verfahren gemäß dem dritten Aspekt umfasst beispielsweise als Teil des Aufbauens des zweiten Kommunikationspfads:
- Empfangen der Kommunikationspfadaufbauanfragenachricht von der Vorrichtung; und
- Bestimmen zumindest teilweise basierend auf der Kommunikationspfadaufbauanfragenachricht, ob der zweite Kommunikationspfad aufgebaut werden soll.

Zum Beispiel enthält und/oder repräsentiert und/oder basiert die Kommunikationspfadaufbauanfragenachricht zumindest teilweise auf den Kommunikationspfadaufbauinformationen. Wie oben offenbart, können die Kommunikationspfadaufbauinformationen eine Telematikvorrichtungidentifizierungsinformation und/oder eine Kommunikationspfadauthentisierungsschlüsselinformation enthalten und/oder repräsentieren. Zum Beispiel kann die Kommunikationspfadaufbauanfragenachricht beispielsweise eine durch die Telematikvorrichtungidentifizierungsinformation repräsentierte und/oder darin enthaltene Kennung der Telematikvorrichtung und/oder einen durch die Kommunikationspfadauthentisierungsschlüsselinformation repräsentierten und/oder darin enthaltenen und/oder darauf basierend bestimmten Authentisierungsschlüssel repräsentieren und/oder enthalten.

Das Bestimmen, ob der zweite Kommunikationspfad aufgebaut werden soll, erfolgt beispielsweise gemäß vorgegebenen Regeln. Zum Beispiel können die Regeln vorgeben, dass der zweite Kommunikationspfad nur dann aufgebaut werden darf, wenn die Kommunikationspfadaufbauanfragenachricht eine Kennung der Telematikvorrichtung und/oder einen Autorisierungsschlüssel, der die Vorrichtung zum Aufbauen des zweiten Kommunikationspfads berechtigt, repräsentiert und/oder enthält. Insbesondere kann vorgesehen sein, dass der zweite Kommunikationspfad nur dann aufgebaut werden darf, wenn die Kommunikationspfadaufbauanfragenachricht zumindest teilweise auf den Kommunikationspfadaufbauinformationen basiert und beispielsweise eine durch die Telematikvorrichtungidentifizierungsinformation repräsentierte und/oder darin enthaltene Kennung der Telematikvorrichtung und/oder einen durch die Kommunikationspfadauthentisierungsschlüsselinformation repräsentierten und/oder darin enthaltenen und/oder darauf basierend bestimmten Authentisierungsschlüssel repräsentiert und/oder enthält. Zu diesem Zweck können die Regeln zum Bestimmen, ob der zweite Kommunikationspfad aufgebaut werden soll, beispielsweise die Kennung der Telematikvorrichtung und/oder den Authentisierungsschlüssel enthalten und/oder repräsentieren.

Wie oben offenbart, können die Kommunikationspfadaufbauinformationen beispielsweise durch die Telematikvorrichtung oder durch den Telematikserver bestimmt werden. Wenn die Kommunikationspfadaufbauinformationen durch die Telematikvorrichtung bestimmt werden, kann beispielsweise vorgesehen sein, dass die Telematikvorrichtung die Kommunikationspfadaufbauinformationen über den dritten Kommunikationspfad an den Telematikserver sendet, so dass der Telematikserver die Kommunikationspfadaufbauinformationen beispielsweise als Teil der Regeln zum Bestimmen, ob der zweite Kommunikationspfad aufgebaut werden soll, speichern kann. Wenn der Telematikserver die Kommunikationspfadaufbauinformationen bestimmt, kann er diese ebenfalls als Teil der Regeln zum Bestimmen, ob der zweite Kommunikationspfad aufgebaut werden soll, speichern.

In beispielhaften Ausführungsformen der verschiedenen Aspekte der Erfindung umfasst das Verfahren gemäß dem ersten Aspekt der Erfindung ferner zumindest einen der folgenden Schritte:
- Empfangen der Telematikinformationen (z.B. der Telematikinformationen, die von der Telematikvorrichtung stammen) von dem Telematikserver über den zweiten Kommunikationspfad;
- Senden der Nutzfahrzeug-Steuerinformationen (z.B. der Nutzfahrzeug-Steuerinformationen, die für die Telematikvorrichtung bestimmt sind) an den Telematikserver über den zweiten Kommunikationspfad.

Zum Beispiel ist der Telematikserver eingerichtet von der Telematikvorrichtung (z.B. über den dritten Kommunikationspfad) empfangene Telematikinformationen (d.h. Telematikinformationen die von der Telematikvorrichtung stammen) über den zweiten Kommunikationspfad an die Vorrichtung zu senden und/oder über den zweiten Kommunikationspfad empfangene Nutzfahrzeug-Steuerinformationen, die für die Telematikvorrichtung bestimmt sind, an die Telematikvorrichtung zu senden.

Dementsprechend kann das Verfahren gemäß dem dritten Aspekt der Erfindung zumindest einen der folgenden Schritte umfassen:
- Empfangen der Nutzfahrzeug-Steuerinformationen (z.B. der Nutzfahrzeug-Steuerinformationen, die für die Telematikvorrichtung bestimmt sind) von der Vorrichtung über den zweiten Kommunikationspfad und Senden der über den zweiten Kommunikationspfad empfangenen Nutzfahrzeug-Steuerinformationen an die Telematikvorrichtung über den dritten Kommunikationspfad;
- Empfangen der Telematikinformationen von der Telematikvorrichtung (z.B. der Telematikinformationen, die von der Telematikvorrichtung stammen) über den dritten Kommunikationspfad und Senden der über den dritten Kommunikationspfad empfangenen Telematikinformationen an die Vorrichtung über den zweiten Kommunikationspfad.

Es versteht sich, dass der Telematikserver dabei empfangene Informationen unmittelbar oder mit einer zeitlichen Verzögerung weitersenden kann. Es ist beispielsweise denkbar, dass der Telematikserver eine vorgegebene Anzahl von Informationen und/oder die in einem vorgegebene Zeitintervall empfangenen Informationen sammelt, um die gesammelten Informationen gemeinsam an die Telematikvorrichtung über den dritten Kommunikationspfad oder die Vorrichtung über den zweiten Kommunikationspfad zu senden. Auch kann es sein, dass der Telematikserver empfangenen Informationen, wenn der zweite und/oder dritte Kommunikationspfad unterbrochen sind, sammelt, bis die Unterbrechnung beendet ist, um sie dann gesammelt zu versenden.

Ferner kann das Verfahren gemäß dem zweiten Aspekt der Erfindung zumindest einen der folgenden Schritte umfassen:
- Empfangen der Nutzfahrzeug-Steuerinformationen von dem Telematikserver über den dritten Kommunikationspfad;
- Senden der Telematikinformationen an den Telematikserver über den dritten Kommunikationspfad.

Diese Ausführungsformen ermöglichen somit eine Datenübertragung (z.B. der Nutzfahrzeug-Steuerinformationen und/oder der Telematikinformationen) zwischen der Vorrichtung und der Telematikvorrichtung über den Telematikserver (d.h. über den zweiten und dritten Kommunikationspfad), wenn der erste Kommunikationspfad unterbrochen ist. Dies ist beispielsweise vorteilhaft, wenn der dritte Kommunikationspfad zwischen der Telematikvorrichtung und dem Telematikserver ohnehin aufgebaut wird, um Telematikinformationen an den Telematikserver zu senden, z.B. weil der Telematikserver eine Benutzeroberfläche zum Zugriff auf Telematikinformationen (z.B. Zustandsinformationen eines oder mehrerer Nutzfahrzeuge) über das Internet bereitstellt.

In beispielhaften Ausführungsformen der verschiedenen Aspekte der Erfindung umfasst der erste Kommunikationspfad eine Netzwerkverbindung über ein drahtloses lokales Kommunikationsnetzwerk und/oder der zweite Kommunikationspfad umfasst eine Netzwerkverbindung in einem zellularen Kommunikationsnetzwerk und/oder der dritte Kommunikationspfad umfasst eine Netzwerkverbindung in einem zellularen Kommunikationsnetzwerk.

Unter einem drahtlosen lokalen Kommunikationsnetzwerk soll beispielsweise ein WLAN-, Zigbee- oder Bluetooth-Kommunikationsnetzwerk verstanden werden. Die Datenübertragung über ein solches drahtloses lokales Kommunikationsnetzwerk kann dementsprechend gemäß einem der folgenden Kommunikationsstandards erfolgen: WLAN-Kommunikationsstandard, Zigbee-Kommunikationsstandard oder Bluetooth-Kommunikationsstandard. Die Bluetooth-Spezifikationen sind derzeit im Internet unter www.bluetooth.org erhältlich. WLAN ist zum Beispiel in den Standards der IEEE-802.11-Familie spezifiziert. Die Zigbee-Spezifikationen sind derzeit im Internet unter www.zigbee.org erhältlich.

Zum Beispiel stellt die Vorrichtung oder die Telematikvorrichtung einen drahtlosen Zugangspunkt des lokalen drahtlosen Kommunikationsnetzwerks bereit. Dabei soll unter dem Bereitstellen des drahtlosen Zugangspunkts zu dem lokalen drahtlosen Kommunikationsnetzwerk beispielsweise verstanden werden, dass der drahtlose Zugangspunkt aktiviert wird, so dass eine oder mehrere Kommunikationspfade über das lokale drahtlose Kommunikationsnetzwerk aufgebaut werden können. Der drahtlose Zugangspunkt zu dem lokalen drahtlosen Kommunikationsnetzwerk ist beispielsweise ein WLAN-, Zigbee- und/oder Bluetooth-Zugangspunkt Der drahtlose Zugangspunkt zu dem lokalen Kommunikationsnetzwerk wird zum Beispiel durch eine drahtlose Kommunikationsschnittstelle der Telematikvorrichtung bereitgestellt.

Unter einem zellularen Kommunikationsnetzwerk soll beispielsweise ein Mobilfunknetzwerk wie ein GSM-, UMTS-, oder LTE -Kommunikationsnetzwerk verstanden werden. Die Datenübertragung über ein solches zellulares Kommunikationsnetzwerk kann dementsprechend gemäß einem der folgenden Kommunikationsstandards erfolgen: GSM, UMTS, oder LTE. Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich.

In beispielhaften Ausführungsformen gemäß dem zweiten und dritten Aspekt der Erfindung umfasst das Verfahren gemäß dem zweiten Aspekt ferner:
- Aufbauen und/oder Bewirken des Aufbauens eines dritten Kommunikationspfades zwischen der Telematikvorrichtung und einem Telematikserver;
- Senden der Kommunikationspfadaufbauinformationen an den Telematikserver über den dritten Kommunikationspfad oder Empfangen der Kommunikationspfadaufbauinformationen von dem Telematikserver über den dritten Kommunikationspfad.

Dementsprechend kann das Verfahren gemäß dem dritten Aspekt der Erfindung ferner umfassen:
- Aufbauen und/oder Bewirken des Aufbauens eines dritten Kommunikationspfades zwischen der Telematikvorrichtung und einem Telematikserver;
- Empfangen der Kommunikationspfadaufbauinformationen von der Telematikvorrichtung über den dritten Kommunikationspfad oder Senden der Kommunikationspfadaufbauinformationen an die Telematikvorrichtung über den dritten Kommunikationspfad.

In beispielhaften Ausführungsformen gemäß dem dritten Aspekt der Erfindung umfasst das Verfahren gemäß dem dritten Aspekt ferner:
- Bereitstellen eine Benutzeroberfläche zum Zugriff auf von der Telematikvorrichtung über den dritten Kommunikationspfad empfangene Telematikinformationen über ein Kommunikationsnetzwerk (z.B. ein Weitverkehrsnetzwerk und/oder das Internet).

Gemäß einem vierten Aspekt der Erfindung wird ein Verfahren offenbart, wobei das Verfahren die Schritte des Verfahrens gemäß dem ersten Aspekt der Erfindung und die Schritte des Verfahrens gemäß dem zweiten Aspekt der Erfindung umfasst. Das Verfahren gemäß dem vierten Aspekt der Erfindung kann ferner die Schritte des Verfahrens gemäß dem dritten Aspekt der Erfindung umfassen.

Gemäß dem vierten Aspekt der Erfindung wird ferner ein System offenbart, wobei das System eine Vorrichtung, insbesondere ein tragbares Gerät, gemäß dem ersten Aspekt der Erfindung und eine Telematikvorrichtung, insbesondere eine Telematikvorrichtung für ein Nutzfahrzeug, gemäß dem zweiten Aspekt der Erfindung umfasst. Ferner kann das System gemäß dem vierten Aspekt der Erfindung einen Telematikserver gemäß dem dritten Aspekt der Erfindung umfassen. Zum Beispiel wird das Verfahren gemäß dem vierten Aspekt der Erfindung durch dieses System ganz oder teilweise ausgeführt

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer Ausführungsform einer Vorrichtung gemäß dem ersten Aspekt der Erfindung;
- Fig. 2: eine schematische Darstellung einer Ausführungsform einer Telematikvorrichtung gemäß dem zweiten Aspekt der Erfindung;
- Fig. 3: eine schematische Darstellung einer Ausführungsform eines Telematikservers gemäß dem dritten Aspekt der Erfindung;
- Fig. 4: eine schematische Darstellung einer beispielhaften Ausführungsform eines Systems gemäß dem vierten Aspekt der Erfindung;
- Fig. 5: ein Flussdiagramm eines Ausführungsbeispiels eines Verfahrens gemäß dem ersten Aspekt der Erfindung;
- Fig. 6: ein Flussdiagramm eines Ausführungsbeispiels eines Verfahrens gemäß dem zweiten Aspekt der Erfindung;
- Fig. 7: ein Flussdiagramm eines Ausführungsbeispiels eines Verfahrens gemäß dem dritten Aspekt der Erfindung; und
- Fig. 8: eine schematische Darstellung eines Ausführungsbeispiels eines Verfahrens gemäß den verschiedenen Aspekten der Erfindung.

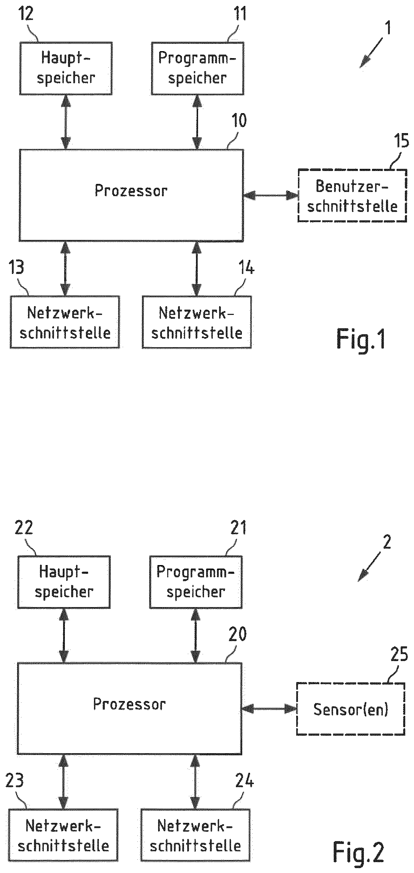

Fig. 1 ist eine schematische Darstellung einer Ausführungsform einer Vorrichtung 1 gemäß dem ersten Aspekt der Erfindung. Im Folgenden wird beispielhaft angenommen, dass die Vorrichtung 1 ein tragbares Benutzergerät wie ein Mobiltelefon ist.

Die Vorrichtung 1 umfasst einen Prozessor 10 und verbunden mit dem Prozessor 10 einen ersten Speicher als Programmspeicher 11, einen zweiten Speicher als Hauptspeicher 12 sowie eine erste drahtlose Netzwerkschnittstelle 13. Ferner umfasst die Vorrichtung 1 eine zweite drahtlose Netzwerkschnittstelle 14 und optional eine Benutzerschnittstelle 15.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Vorrichtung 1 auch mehrere Prozessoren 10 umfassen kann.

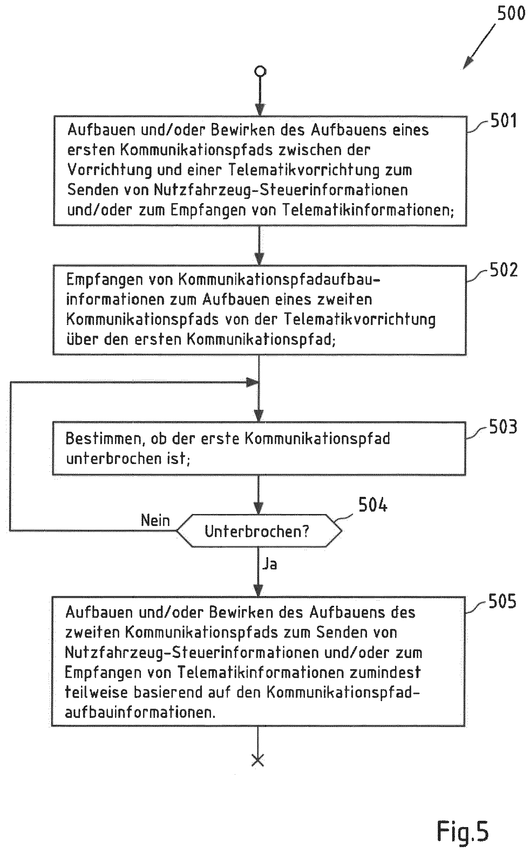

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines Computerprogramms (z.B. einer sogenannten APP) gemäß dem ersten Aspekt der Erfindung, das Programmanweisungen umfasst, die den Prozessor 10 veranlassen, das Verfahren gemäß dem ersten Aspekt der Erfindung (z.B. das Verfahren gemäß dem in Fig. 5 dargestellten Flussdiagramm 500) auszuführen und/oder zu steuern, wenn der Prozessor 10 diese in Programmspeicher 11 gespeicherten Programmanweisungen ausführt.

Programmspeicher 11 enthält ferner beispielsweise das Betriebssystem der Vorrichtung 1, das beim Starten der Vorrichtung 1 zumindest teilweise in Hauptspeicher 12 geladen und vom Prozessor 10 ausgeführt wird. Insbesondere wird beim Starten der Vorrichtung 1 zumindest ein Teil des Kerns des Betriebssystems in den Hauptspeicher 12 geladen und von Prozessor 10 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 11 auch Teil des Prozessors 10 sein.

Prozessor 10 steuert die erste drahtlose Netzwerkschnittstelle 13, welche beispielsweise eingerichtet ist zur Datenübertragung mit einer Telematikvorrichtung (z.B. der in Fig. 2 dargestellten Telematikvorrichtung 2) über einen ersten drahtlosen Kommunikationspfad. Ein Beispiel für den ersten drahtlosen Kommunikationspfad ist eine Netzwerkverbindung über ein drahtloses lokales Kommunikationsnetzwerk wie ein Bluetooth-, WLAN- oder Zigbee-Kommunikationsnetzwerk. Dementsprechend ist die erste drahtlose Netzwerkschnittstelle 13 beispielsweise als Bluetooth-, WLAN- oder Zigbee-Schnittstelle ausgebildet ist.

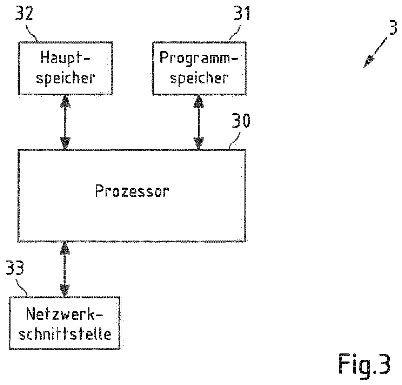

Ferner steuert Prozessor 10 die zweite drahtlose Netzwerkschnittstelle 14, welche beispielsweise eingerichtet ist zur Datenübertragung mit einem Telematikserver (z.B. dem in Fig. 3 dargestellten Telematikserver 3 eines Telematikdienstes) über einen zweiten drahtlosen Kommunikationspfad. Ein Beispiel für den zweiten drahtlosen Kommunikationspfad ist eine Netzwerkverbindung über ein Mobilfunknetzwerk wie ein GSM-, UMTS- und/oder LTE-Kommunikationsnetzwerk. Dementsprechend ist die zweite drahtlose Netzwerkschnittstelle 14 beispielsweise als GSM-, UMTS- und/oder LTE-Schnittstelle ausgebildet.

Eine drahtlose Netzwerkschnittstelle kann beispielsweise Daten (z.B. Informationen) über eine Netzwerkverbindung empfangen und an den Prozessor weiterleiten und/oder Daten (z.B. Informationen) von dem Prozessor empfangen und über eine Netzwerkverbindung senden. Ein Beispiel für eine drahtlose Netzwerkschnittstelle ist ein drahtloser Kommunikationsnetzwerkadapter. Zum Beispiel umfasst eine drahtlose Netzwerkschnittstelle nebst einer Antenne zumindest eine Senderschaltung und eine Empfängerschaltung oder eine Sendeempfängerschaltung.

Benutzerschnittstelle 15 der Vorrichtung 1 dient beispielsweise zur Ausgabe von Informationen an einen Benutzer und/oder zum Erfassen von Eingaben eines Benutzers. Wie oben offenbart, kann eine Benutzerschnittstelle eine Tastatur, eine Maus, ein Bildschirm, ein berührungsempfindlicher Bildschirm, ein Lautsprecher, ein Mikrofon, usw. sein.

Die Komponenten 10 bis 15 der Vorrichtung 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Vorrichtung 1 neben den Komponenten 10 bis 15 weitere Komponenten umfassen kann.

Fig. 2 ist eine schematische Darstellung einer beispielhaften Ausführungsform einer Telematikvorrichtung 2, insbesondere einer Telematikvorrichtung für ein Nutzfahrzeug, gemäß dem zweiten Aspekt der Erfindung.

Die Telematikvorrichtung 2 umfasst einen Prozessor 20 und verbunden mit dem Prozessor 20 einen ersten Speicher als Programmspeicher 21, einen zweiten Speicher als Hauptspeicher 22, eine erste drahtlose Netzwerkschnittstelle 23, eine zweite drahtlose Netzwerkschnittstelle 24 und optional einen oder mehrere Sensoren 25.

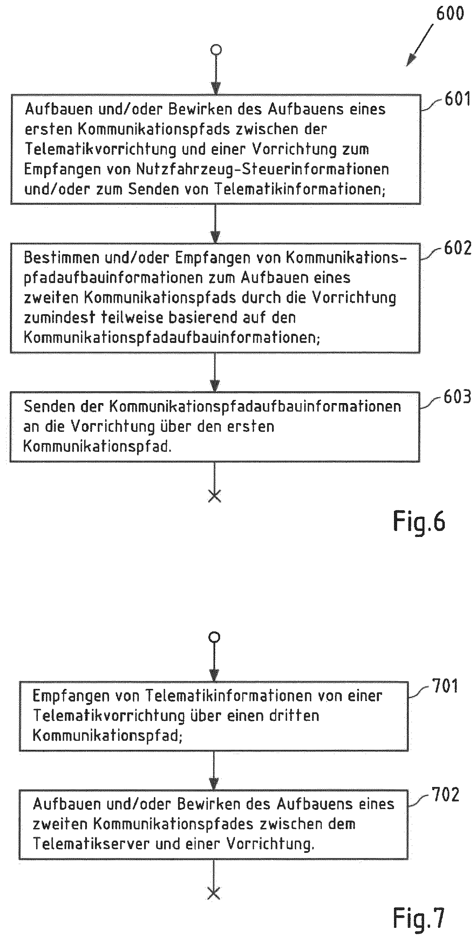

Prozessor 20 führt Programmanweisungen aus, die in Programmspeicher 21 gespeichert sind, und speichert beispielsweise Zwischenergebnisse oder ähnliches in Hauptspeicher 22. Die Telematikvorrichtung 2 kann auch mehrere Prozessoren umfassen. Der Programmspeicher 21 enthält beispielsweise Programmanweisungen eines Computerprogramms gemäß dem zweiten Aspekt der Erfindung, das Programmanweisungen umfasst, die den Prozessor 20 veranlassen, das Verfahren gemäß dem zweiten Aspekt der Erfindung (z.B. das Verfahren gemäß dem in Fig. 6 dargestellten Flussdiagram 600) auszuführen und/oder zu steuern, wenn der Prozessor 20 diese in Programmspeicher 21 gespeicherten Programmanweisungen ausführt. Programmspeicher 21 enthält ferner beispielsweise das Betriebssystem der Telematikvorrichtung 2.

Es versteht sich, dass Hauptspeicher 22 und Programmspeicher 21 auch als ein Speicher ausgebildet sein können. Alternativ können Hauptspeicher 22 und/oder Programmspeicher 21 jeweils durch mehrere Speicher gebildet werden. Ferner können Hauptspeicher 22 und/oder Programmspeicher 21 auch Teil des Prozessors 20 sein.

Prozessor 20 steuert die erste drahtlose Netzwerkschnittstelle 23, welche beispielsweise als Bluetooth-, WLAN-oder Zigbee-Schnittstelle ausgebildet ist, und die zweite drahtlose Netzwerkschnittstelle 24, welche beispielsweise als GSM-, UMTS- und/oder LTE-Schnittstelle ausgebildet ist

Die erste drahtlose Netzwerkschnittstelle 23 ist beispielsweise eingerichtet zur Datenübertragung mit einer Vorrichtung (z.B. der in Fig. 1 dargestellten Vorrichtung 1) über einen ersten Kommunikationspfad (z.B. über eine Netzwerkverbindung über ein Bluetooth-, WLAN- oder Zigbee-Kommunikationsnetzwerk). Ferner ist die erste drahtlose Netzwerkschnittstelle beispielsweise eingerichtet, einen drahtlosen Zugangspunkt eines drahtlosen lokalen Kommunikationsnetzwerks (z.B. eines Bluetooth-, WLAN- oder Zigbee-Kommunikationsnetzwerkes) bereitzustellen. Dagegen ist die zweite drahtlose Netzwerkschnittstelle 24 beispielsweise eingerichtet zum Datenaustausch mit einem Telematikserver (z.B. dem in Fig. 3 dargestellten Server 3 eines Telematikdienstes) über einen dritten Kommunikationspfad (z.B. über eine Netzwerkverbindung über ein GSM-, UMTS- und/oder LTE-Kommunikationsnetzwerk).

Optional umfasst die Telematikvorrichtung 2 einen oder mehrere Sensoren 25. Diese dienen zum Beispiel zum Erfassen von Zustandsinformationen über das Nutzfahrzeug. Wie oben offenbart, sind Beispiele solcher Zustandsinformationen: Tankfüllstandinformationen, Reifendruckinformationen, Feuchtigkeitsinformationen, Temperaturinformationen, Türöffnungs- und -schließinformationen und/oder Positionsinformationen. Dementsprechend kann ein Tankfüllstandsensor, ein Reifendrucksensor, ein Feuchtigkeitssensor, ein Temperatursensor, ein Türöffnungs- und/oder -schließsensor und/oder ein Positionssensor Teil der Sensoren 25 sein. Alternativ oder zusätzlich ist auch denkbar, dass die Telematikvorrichtung 2 eine oder mehrere Schnittstellen zur Kommunikation mit solchen Sensoren 25 umfasst.

Die Komponenten 20 bis 25 der Telematikvorrichtung 2 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Telematikvorrichtung 2 neben den Komponenten 20 bis 25 weitere Komponenten umfassen kann.

Fig. 3 ist eine schematische Darstellung einer beispielhaften Ausführungsform eines Telematikservers 3 gemäß dem dritten Aspekt der Erfindung.

Der Telematikserver umfasst einen Prozessor 30 und verbunden mit dem Prozessor 30 einen ersten Speicher als Programmspeicher 31, einen zweiten Speicher als Hauptspeicher 32 und eine Netzwerkschnittstelle 33.

Prozessor 30 ist insbesondere als Mikroprozessor, Mikrokontrolleinheit wie Mikrocontroller, digitaler Signalprozessor (DSP), Anwendungsspezifische Integrierte Schaltung (ASIC) oder Field Programmable Gate Array (FPGA) ausgebildet.

Prozessor 30 führt Programmanweisungen aus, die in Programmspeicher 31 gespeichert sind, und speichert beispielsweise Zwischenergebnisse oder ähnliches in Hauptspeicher 32.

In Programmspeicher 31 sind beispielsweise Programmanweisungen gespeichert, die den Prozessor 30, wenn er die Programmanweisungen ausführt, veranlassen, das Verfahren gemäß dem dritten Aspekt der Erfindung zumindest teilweise auszuführen und/oder zu steuern.

Prozessor 30 steuert die Netzwerkschnittstelle 33, welche beispielsweise eingerichtet ist zur Datenübertragung mit einer Vorrichtung (z.B. der in Fig. 1 dargestellten Vorrichtung 1) über einen zweiten Kommunikationspfad und/oder zur Datenübertragung mit einer Telematikvorrichtung (z.B. der in Fig. 2 dargestellten Telematikvorrichtung 2) über einen dritten Kommunikationspfad. Die Netzwerkschnittstelle 33 kann beispielsweise als drahtgebundene Netzwerkschnittstelle oder als drahtlose Netzwerkschnittstelle ausgebildet sein. Ein Beispiel für eine drahtgebundene Netzwerkschnittstelle ist eine Ethernet-Schnittstelle. Ethernet ist zum Beispiel in den Standards der IEEE-802.3-Familie spezifiziert. Ein Beispiel für eine drahtlose Netzwerkschnittstelle ist eine Bluetooth-, WLAN-, Zigbee-, GSM-, UMTS- und/oder LTE-Schnittstelle.

Die Komponenten 30 bis 33 des Telematikservers sind beispielsweise über einen oder mehrere Bussysteme (z.B. ein oder mehrere serielle und/oder parallele Busverbindungen) kommunikativ und/oder operativ miteinander verbunden.

Es versteht sich, dass der Telematikserver neben den Komponenten 30 bis 33 weitere Komponenten (z.B. eine Benutzerschnittstelle) umfassen kann.

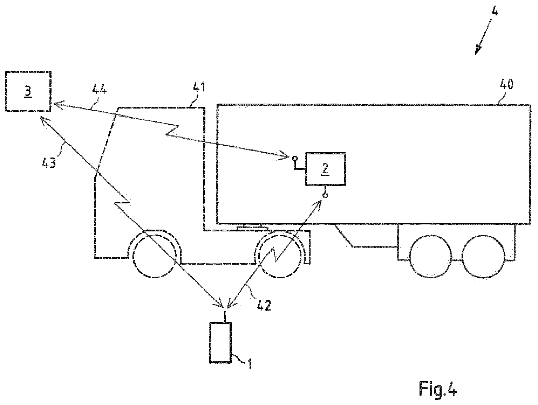

Fig. 4 ist eine schematische Darstellung einer beispielhaften Ausführungsform eines Systems 4 gemäß dem vierten Aspekt der Erfindung.

Das System 4 umfasst unter anderem die Vorrichtung 1 aus Fig. 1 und die Telematikvorrichtung 2 aus Fig. 2, welche in einem Sattelauflieger 40 als Beispiel für ein Nutzfahrzeug angeordnet ist. Gemäß dem vierten Aspekt der Erfindung umfasst das System 4 optional den Telematikserver 3 aus Fig. 3.

Die Zugmaschine des Sattelaufliegers 40 ist in Fig. 4 mit dem Bezugszeichen 41 versehen. Sie ist in dem in Fig. 4 dargestellten Fall kein Bestandteil des Systems 4.

Die Vorrichtung 1 ist in Fig. 4 beispielhaft als Mobiltelefon dargestellt Es versteht sich, dass die Vorrichtung 1 auch andere Ausgestaltungen haben kann. Beispielsweise kann die Vorrichtung 1 auch eine Smartwatch, ein persönlicher digitaler Assistent, ein tragbares Navigationsgerät, ein Navigationsgerät oder ein Bordcomputer der Zugmaschine 41, ein Tabletcomputer und/oder ein Laptopcomputer sein. Zum Beispiel befindet sich die Vorrichtung 1 im Führerhaus der Zugmaschine 41, um von dem Fahrer verwendet zu werden.

In Fig. 4 sind Kommunikationspfade 42, 43 und 44 dargestellt. Über den ersten Kommunikationspfad 42 können die Vorrichtung 1 und die Telematikvorrichtung 2 Daten (z.B. Telematikinformationen und/oder Nutzfahrzeug-Steuerinformationen) übertragen (z.B. senden und empfangen). In gleicher Weise können die Vorrichtung 1 und der Telematikserver 3 bzw. die Telematikvorrichtung 2 und der Telematikserver 3 über den zweiten Kommunikationspfad 43 bzw. den dritten Kommunikationspfad 44 Daten (z.B. Telematikinformationen und/oder Nutzfahrzeug-Steuerinformationen) übertragen (z.B. senden und empfangen).

Zum Beispiel kann die Telematikvorrichtung 2 durch die Sensoren 25 erfasste Zustandsinformationen des Sattelaufliegers 40 als Telematikinformationen über den ersten Kommunikationspfad 42 an die Vorrichtung 1 und über den dritten Kommunikationspfad 44 an den Telematikserver senden. Der Telematikserver 3 stellt beispielsweise eine Benutzeroberfläche zum Zugriff auf die empfangenen Telematikinformationen über das Internet bereit. Die an der Vorrichtung 1 empfangenen Telematikinformationen können durch die Benutzerschnittstelle 15 der Vorrichtung 1 ausgegeben werden.

Der erste Kommunikationspfad 42 ist beispielsweise eine drahtlose Netzwerkverbindung über ein drahtloses lokales Kommunikationsnetzwerk wie ein Bluetooth-, WLAN- oder Zigbee-Kommunikationsnetzwerk. Die Telematikvorrichtung 2 oder die Vorrichtung 1 kann beispielsweise einen drahtlosen Zugangspunkt des drahtlosen lokalen Kommunikationsnetzwerks bereitstellen. Zum Beispiel ist der erste Kommunikationspfad 42 eine direkte, drahtlose Netzwerkverbindung zwischen der Vorrichtung 1 und der Telematikvorrichtung 2. Dies ist beispielsweise vorteilhaft, um den Benutzer der Vorrichtung 1 (z.B. dem Fahrer der Zugmaschine 41) die Möglichkeit zu geben, den Zustand des Sattelaufliegers 40 aus der Entfernung zu überwachen, solange sich die Vorrichtung 1 und die Telematikvorrichtung 2 innerhalb des drahtlosen lokalen Kommunikationsnetzwerks befinden.

Der zweite Kommunikationspfad 43 und der dritte Kommunikationspfad 44 schließen beispielsweise zumindest eine drahtlose Netzwerkverbindung über ein drahtloses Kommunikationsnetzwerk wie ein Mobilfunknetzwerk (z.B. ein GSM-, UMTS- und/oder LTE-Kommunikationsnetzwerk) ein. Es versteht sich, dass der zweite Kommunikationspfad 43 und der dritte Kommunikationspfad 44 neben zumindest einer drahtlosen Netzwerkverbindung (z.B. zwischen der Telematikvorrichtung 2 oder der Vorrichtung 1 und einer Basisstation des Mobilfunknetzwerks) auch eine oder mehrere drahtgebundene Netzwerkverbindungen (z.B. zwischen der Basisstation und dem Telematikserver 3) umfassen können. Insbesondere können der zweite Kommunikationspfad 43 und der dritte Kommunikationspfad 44 auch eine Netzwerkverbindung über ein öffentliches Kommunikationsnetzwerk wie das Internet einschließen.

Es versteht sich, dass die Datenübertragung über einen oder mehrere der Kommunikationspfade 42, 43 und 44 verschlüsselt erfolgen kann.

Fig. 5 zeigt ein Flussdiagramm 500 eines Ausführungsbeispiels eines Verfahrens gemäß dem ersten Aspekt der Erfindung. Im Folgenden wird beispielhaft angenommen, dass die Schritte 501 bis 505 durch die Vorrichtung 1 in System 4 ausgeführt werden. Wie oben offenbart, ist die Vorrichtung 1 zum Beispiel ein Mobiltelefon.

In einem Schritt 501 erfolgt das Aufbauen und/oder Bewirken des Aufbauens des ersten Kommunikationspfads 42 zwischen der Vorrichtung 1 und der Telematikvorrichtung 2 zum Senden von Nutzfahrzeug-Steuerinformationen und/oder zum Empfangen von Telematikinformationen.

Unter dem Aufbauen eines Kommunikationspfads zwischen zwei Vorrichtungen soll beispielsweise das Aushandeln (z.B. durch den Austausch entsprechender Anfrage- und Antwortnachrichten zwischen den beiden Vorrichtungen) und/oder Herstellen und/oder das Unterstützen des Aushandelns und/oder Herstellens einer Netzwerkverbindung über ein oder mehrere Kommunikationsnetzwerke (z.B. gemäß einem oder mehreren standardisierten Kommunikationsprotokollen) zwischen diesen beiden Vorrichtungen verstanden werden. Dementsprechend kann das Aufbauen des ersten Kommunikationspfads 42 in Schritt 501 zumindest teilweise auf dem Senden und/oder Empfangen einer ersten Kommunikationspfadaufbauanfragenachricht basieren. Beispielsweise kann zum Aufbauen des ersten Kommunikationspfads die erste Kommunikationspfadaufbauanfragenachricht in Schritt 501 von der Vorrichtung 1 an die Telematikvorrichtung 2 gesendet werden, oder die erste Kommunikationspfadaufbauanfragenachricht wird in Schritt 501 von der Telematikvorrichtung 2 an der Vorrichtung 1 empfangen. Die erste Kommunikationspfadaufbauanfragenachricht kann beispielweise den Aufbau des ersten Kommunikationspfads 42 bewirken und/oder Teil eines Aushandelns des ersten Kommunikationspfads 42 (z.B. einer Netzwerkverbindung über ein drahtloses Kommunikationsnetzwerk wie ein Bluetooth-, WLAN- oder Zigbee-Kommunikationsnetzwerk) sein. Dies soll beispielsweise so verstanden werden, dass die Vorrichtung 1 und die Telematikvorrichtung 2 den ersten Kommunikationspfad 42 zusammen aufbauen.

Wie oben offenbart, kann die Vorrichtung 1 über den ersten Kommunikationspfad 42 Telematikinformationen von der Telematikvorrichtung 2 empfangen und Nutzfahrzeug-Steuerinformationen an die Telematikvorrichtung 2 senden.

In einem Schritt 502 werden Kommunikationspfadaufbauinformationen zum Aufbauen des zweiten Kommunikationspfads 43 von der Telematikvorrichtung über den ersten Kommunikationspfad 42 empfangen.

Wie oben offenbart, sind die Kommunikationspfadaufbauinformationen beispielsweise eine oder mehrere Informationen, die für den Aufbau des zweiten Kommunikationspfads durch die Vorrichtung notwendig sind und/oder den Aufbau des zweiten Kommunikationspfads durch die Vorrichtung erleichtern. Im Folgenden wird beispielhaft davon ausgegangen, dass die in Schritt 502 empfangenen Kommunikationspfadaufbauinformationen zumindest eine Kennung der Telematikvorrichtung 2 und einen Autorisierungsschlüssel, der die Vorrichtung 1 zum Aufbauen des zweiten Kommunikationspfads 43 autorisiert und/oder mit dem die Vorrichtung 1 nachweisen kann, dass sie zum Aufbauen des zweiten Kommunikationspfades 43 autorisiert ist, enthalten und/oder repräsentieren.

Schritt 502 kann beispielsweise zeitlich unmittelbar nach Schritt 501 ablaufen. Ebenso kann Schritt 502 mit zeitlicher Verzögerung nach Schritt 501 ablaufen (z.B. wenn die Kommunikationspfadinformationen als Antwort auf eine entsprechende Anfrage nach den Kommunikationspfadinformationen empfangen werden)

In Schritt 503 bestimmt die Vorrichtung 1, ob der erste Kommunikationspfad 42 unterbrochen ist.

Eine solche Unterbrechung kann beispielsweise aufgrund von Störungen durch andere in der Nähe befindliche lokale drahtlose Kommunikationsnetzwerke und/oder der Anwesenheit oder Abwesenheit von geeigneten Reflektoren in der Umgebung des Nutzfahrzeugs eintreten. Das Bestimmen in Schritt 503 kann beispielsweise gemäß vorgegebenen Regeln (z.B. basierend auf einem oder mehreren vorgegebenen Schwellwerten) erfolgen. Zum Beispiel kann in Schritt 503 bestimmt werden, dass der erste Kommunikationspfad unterbrochen ist, wenn die Datenübertragungsrate über den ersten Kommunikationspfad unter einen vorgegebenen Schwellwert sinkt und/oder wenn die Antwortzeit auf eine von der Vorrichtung 1 über den ersten Kommunikationspfad an die Telematikvorrichtung 2 gesendeten Anfrage (z.B. einem sogenannten Ping) einen vorgegebenen Schwellwert überschreitet.

Wenn in Schritt 503 bestimmt wird, dass der erste Kommunikationspfad nicht unterbrochen ist, kann in einem Schritt 504 beispielsweise vorgesehen sein, dass Schritt 503 wiederholt werden soll. Wenn in Schritt 503 jedoch bestimmt wird, dass der erste Kommunikationspfad unterbrochen ist, wird das Flussdiagramm mit Schritt 505 fortgesetzt.

Schritt 505 umfasst das Aufbauen und/oder Bewirken des Aufbauens des zweiten Kommunikationspfads 43 zum Senden von Nutzfahrzeug-Steuerinformationen und/oder zum Empfangen von Telematikinformationen zumindest teilweise basierend auf den in Schritt 502 empfangenen Kommunikationspfadaufbauinformationen.

Zum Beispiel umfasst das Aufbauen und/oder Bewirken des Aufbauen des zweiten Kommunikationspfads 43 in Schritt 505 das Aushandeln und/oder Herstellen und/oder das Unterstützen des Aushandelns und/oder Herstellens einer Netzwerkverbindung über ein oder mehrere Kommunikationsnetzwerke zwischen der Vorrichtung 1 und dem Telematikserver 3. Dies soll beispielsweise so verstanden werden, dass die Vorrichtung 1 und der Telematikserver 3 den zweiten Kommunikationspfads 43 zusammen aufbauen. Dabei kann die Vorrichtung 1 durch die in Schritt 502 als Teil der Kommunikationspfadaufbauinformationen empfangene Kennung der Telematikvorrichtung 2 und dem Autorisierungsschlüssel gegenüber dem Telematikserver nachweisen, dass sie zum Aufbau des zweiten Kommunikationspfads zum Empfangen von Telematikinformationen, die von der Telematikvorrichtung 2 stammen, und/oder zum Senden von Nutzfahrzeug-Steuerinformationen, die für Telematikvorrichtung 2 bestimmt sind, berechtigt ist

Beispielsweise sendet die Vorrichtung 1 in Schritt 505 eine Kommunikationspfadaufbauanfragenachricht, die die in Schritt 502 als Teil der Kommunikationspfadaufbauinformationen empfangene Kennung der Telematikvorrichtug 2 und den Autorisierungsschlüssel enthält und/oder zumindest teilweise darauf basiert, zum Aufbauen des Kommunikationspfads 43 an den Telematikserver 3.

Wenn der zweiten Kommunikationspfad 43 aufgebaut ist, kann die Vorrichtung 1 über den zweiten Kommunikationspfad 43 beispielsweise Telematikinformationen, die von der Telematikvorrichtung 2 stammen und über den dritten Kommunikationspfad 44 an den Telematikserver 3 gesendet wurden, von dem Telematikserver 3 empfangen und Nutzfahrzeugsteuer-Informationen, die für die TelematikVorrichtung 2 bestimmt sind, an den Telematikserver 3 senden.

Es versteht sich, dass Schritt 503 auch während der zweite Kommunikationspfad aufgebaut ist, wiederholt werden kann, um zu Bestimmen, ob der erste Kommunikationspfad 42 weiterhin unterbrochen ist. Auf diese Weise kann beispielsweise festgestellt werden, ob nach einer Phase der Unterbrechung des ersten Kommunikationspfads 42 dieser wieder intakt ist. In diesem Fall kann der erste Kommunikationspfad 42 zur Datenübertragung zwischen der Vorrichtung 1 und der Telematikvorrichtung 2 genutzt und der zweite Kommunikationspfad 43 beispielsweise beendet werden.

Es versteht sich, dass insbesondere die Schritte 503, 504 und 505, aber auch möglicherweise sämtliche Schritte 501 bis 505 automatisiert ausgeführt werden können, also ohne ein manuelles Eingreifen des Benutzers der Vorrichtung 1. Zum Beispiel ist es insbesondere nicht erforderlich, dass der Benutzer den Autorisierungsschlüssel oder die Kennung der Telematikvorrichtung manuell eingibt Stattdessen können die Schritte 501 bis 505 für den Benutzer transparent und völlig unbemerkt ablaufen.

Fig. 6 zeigt ein Flussdiagramm 600 eines Ausführungsbeispiels eines Verfahrens gemäß dem zweiten Aspekt der Erfindung. Im Folgenden wird beispielhaft angenommen, dass die Schritte 601 bis 603 durch die Telematikvorrichtung 2 in System 4 ausgeführt werden.

In einem Schritt 601 erfolgt das Aufbauen und/oder Bewirken des Aufbauens des ersten Kommunikationspfads 42 zwischen der Telematikvorrichtung 2 und der Vorrichtung 1 zum Empfangen von Nutzfahrzeug-Steuerinformationen und/oder zum Senden von Telematikinformationen.

Schritt 601 betrifft das Aufbauen und/oder Bewirken des Aufbauens des ersten Kommunikationspfads 42 auf Seiten der Telematikvorrichtung 2 und korrespondiert zum oben offenbarten Schritt 501 des Flussdiagramms 500, der das Aufbauen und/oder Bewirken des Aufbauens des ersten Kommunikationspfads 42 auf Seiten der Vorrichtung 1 betrifft.

Wie oben offenbart, kann das Aufbauen des ersten Kommunikationspfads 42 zumindest teilweise auf dem Senden und/oder Empfangen einer ersten Kommunikationspfadaufbauanfragenachricht basieren. Dementsprechend kann zum Aufbauen des ersten Kommunikationspfads die erste Kommunikationspfadaufbauanfragenachricht in Schritt 601 von der Vorrichtung 1 an der Telematikvorrichtung 2 empfangen werden (z.B. wenn die erste Kommunikationspfadaufbauanfragenachricht in Schritt 501 des Flussdiagramms 500 von der Vorrichtung 1 an die Telematikvorrichtung 2 gesendet wird), oder die erste Kommunikationspfadaufbauanfragenachricht wird in Schritt 601 von der Telematikvorrichtung 2 an die Vorrichtung 1 gesendet (z.B. wenn die erste Kommunikationspfadaufbauanfragenachricht in Schritt 501 des Flussdiagramms 500 von der Telematikvorrichtung 2 an der Vorrichtung 1 empfangen wird). Die erste Kommunikationspfadaufbauanfragenachricht kann beispielweise den Aufbau des ersten Kommunikationspfads 42 bewirken und/oder Teil eines Aushandelns des ersten Kommunikationspfads 42 (z.B. einer Netzwerkverbindung über ein drahtloses Kommunikationsnetzwerk wie ein Bluetooth-, WLAN- oder Zigbee-Kommunikationsnetzwerk) sein. Dies soll beispielsweise so verstanden werden, dass die Vorrichtung 1 und die Telematikvorrichtung 2 den ersten Kommunikationspfad 42 zusammen aufbauen.

Wie oben offenbart, kann die Telematikvorrichtung 2 über den ersten Kommunikationspfad 42 Telematikinformationen an die Vorrichtung 1 senden und Nutzfahrzeug-Steuerinformationen von der Vorrichtung 1 empfangen.

Beispielsweise kann zum Aufbauen des ersten Kommunikationspfads die erste Kommunikationspfadaufbauanfragenachricht in Schritt 501 von der Vorrichtung 1 an die Telematikvorrichtung 2 gesendet werden, oder die erste Kommunikationspfadaufbauanfragenachricht wird in Schritt 501 von der Telematikvorrichtung 2 an der Vorrichtung 1 empfangen. Die erste Kommunikationspfadaufbauanfragenachricht kann beispielweise den Aufbau des ersten Kommunikationspfads 42 bewirken und/oder Teil eines Aushandelns des ersten Kommunikationspfads 42 (z.B. einer Netzwerkverbindung über ein drahtloses Kommunikationsnetzwerk wie ein Bluetooth-, WLAN- oder Zigbee-Kommunikationsnetzwerk) sein.

Ferner kann die Telematikvorrichtung 2 den dritten Kommunikationspfad 44 in einem weiteren optionalen Schritt aufbauen und/oder das Aufbauen des dritten Kommunikationspfads 44 bewirken. Dieser weitere optionale Schritt kann beispielsweise gleichzeitig oder zeitlich vor oder nach Schritt 601 ablaufen. Wie oben offenbart, kann die Telematikvorrichtung 2 durch die Sensoren 25 erfasste Zustandsinformationen des Sattelaufliegers 40 als Telematikinformationen über den dritten Kommunikationspfad 44 an den Telematikserver 3 senden. Außerdem kann die Telematikvorrichtung 2 Nutzfahrzeug-Steuerinformationen, die für die Telematikvorrichtung 2 bestimmt sind, über den dritten Kommunikationspfad 44 von dem Telematikserver 3 empfangen.

In einem Schritt 602 erfolgt das Bestimmen und/oder Empfangen von Kommunikationspfadaufbauinformationen zum Aufbauen des zweiten Kommunikationspfads 43 durch die Vorrichtung 1 zumindest teilweise basierend auf den Kommunikationspfadaufbauinformationen.

Die Kommunikationspfadinformationen korrespondieren zu den oben im Zusammenhang mit Schritt 502 des Flussdiagramms 500 offenbarten Kommunikationspfadinformationen. Dementsprechend enthalten und/oder repräsentieren die Kommunikationspfadaufbauinformationen zumindest eine Kennung der Telematikvorrichtung 2 und einen Autorisierungsschlüssel, der die Vorrichtung 1 zum Aufbauen des zweiten Kommunikationspfades 43 autorisiert und/oder mit dem die Vorrichtung 1 nachweisen kann, dass sie zum Aufbauen des zweiten Kommunikationspfades 43 autorisiert ist.

Im Folgenden wird beispielhaft davon ausgegangen, dass die Kommunikationspfadaufbauinformationen in Schritt 602 durch die Telematikvorrichtung erzeugt werden. Es versteht sich jedoch, dass diese zumindest teilweise auch durch den Telematikserver 3 bestimmt und in Schritt 602 über den dritten Kommunikationspfad 44 von dem Telematikserver 3 an der Telematikvorrichtung 2 empfangen werden könnten.

Die Kennung der Telematikvorrichtung 2 kann beispielsweise in Programmspeicher 21 gespeichert sein und wird in Schritt 602 ausgelesen. Dabei soll unter einer Kennung der Telematikvorrichtung 2 beispielsweise eine Seriennummer, eine ID-Nummer (z.B. eine Telematik-ID), eine Adresse (z.B. eine MAC-Adresse (Media-Access-Control), eine IP-Adresse (Internet Protocol)) und/oder ein Name (z.B. ein Netzwerkname) der Telematikvorrichtung verstanden werden.

Der Autorisierungsschlüssel wird in Schritt 602 beispielsweise durch die Telematikvorrichtung 2 gemäß vorgegebenen Regeln (z.B. einen vorgegebenem Schlüsselerzeugungsalgorithmus) erzeugt. Zum Beispiel kann vorgegeben sein, dass der Autorisierungsschlüssel zumindest teilweise basierend auf einer Zufallszahl und/oder einem Algorithmus zum Erzeugen einer Zufallszahl oder einer Pseudozufallszahl bestimmt wird.

Es ist beispielsweise denkbar, dass Schritt 602 zeitgleich mit Schritt 601 von der Telematikvorrichtung 2 ausgeführt wird, oder dass Schritt 602 zeitlich vor oder nach Schritt 601 von der Telematikvorrichtung 2 ausgeführt wird.

In einem Schritt 603 erfolgt das Senden der Kommunikationspfadaufbauinformationen an die Vorrichtung 1 über den ersten Kommunikationspfad 43.

Schritt 603 betrifft das Senden der Kommunikationspfadaufbauinformationen an die Vorrichtung 1 über den ersten Kommunikationspfad 42 auf Seiten der Telematikvorrichtung 2 und korrespondierend zum oben offenbarten Schritt 502 des Flussdiagramms 500. Zum Beispiel werden die in Schritt 502 an der Vorrichtung 1 empfangenen Kommunikationspfadaufbauinformationen in Schritt 603 von der Telematikvorrichtung gesendet

Ferner kann vorgesehen sein, dass die Telematikvorrichtung 2 in einem weiteren optionalen Schritt die Kommunikationspfadaufbauinformationen zumindest teilweise über den dritten Kommunikationspfad 44 an den Telematikserver 3 sendet, so dass der Telematikserver 3 den zweiten Kommunikationspfad 43 basierend auf den Kommunikationspfadaufbauinformationen (z.B. zusammen mit der Vorrichtung 1) aufbauen kann.

Fig. 7 zeigt ein Flussdiagramm 700 eines Ausführungsbeispiels eines Verfahrens gemäß dem dritten Aspekt der Erfindung. Im Folgenden wird beispielhaft angenommen, dass die Schritte 701 und 702 durch den Telematikserver 3 in System 4 ausgeführt werden.

In einem Schritt 701 erfolgt das Empfangen von Telematikinformationen von der Telematikvorrichtung 2 über den dritten Kommunikationspfad 44.

Wie oben offenbart, kann die Telematikvorrichtung 2 durch die Sensoren 25 erfasste Zustandsinformationen des Sattelaufliegers 40 als Telematikinformationen über den dritten Kommunikationspfad 44 an den Telematikserver 3 senden. Diese Telematikinformationen werden beispielsweise in Schritt 701 an dem Telematikserver 3 empfangen. Der Telematikserver 3 speichert die empfangenen Telematikinformationen beispielsweise in Programmspeicher 31 und stellt eine Benutzeroberfläche zum Zugriff auf die gespeicherten Telematikinformationen (z.B. Zustandsinformationen des Sattelaufliegers 40) über das Internet bereit.

Ferner sendet die Telematikvorrichtung 2 beispielsweise durch die Telematikvorrichtung 2 bestimmte Kommunikationspfadaufbauinformationen über den dritten Kommunikationspfad 44 an den Telematikserver 3. Diese Kommunikationspfadaufbauinformationen werden beispielsweise in einem weiteren optionalen Schritt an dem Telematikserver 3 empfangen. Der Telematikserver 3 speichert die empfangenen Kommunikationspfadaufbauinformationen beispielsweise ebenfalls in Programmspeicher 31.

Es versteht sich, dass der dritte Kommunikationspfad 44 zwischen der Telematikvorrichtung 2 und dem Telematikserver 3 beispielsweise zuvor in einem weiteren optionalen Schritt aufgebaut und/oder das Aufbauen des dritten Kommunikationspfads 44 bewirkt werden kann.

In einem Schritt 702 erfolgt das Aufbauen und/oder Bewirken des Aufbauens des zweiten Kommunikationspfads 43 zwischen dem Telematikserver 3 und der Vorrichtung 1.

Schritt 702 betrifft das Aufbauen und/oder Bewirken des Aufbauens des zweiten Kommunikationspfads 43 auf Seiten des Telematikservers 3 und korrespondiert zum oben offenbarten Schritt 505 des Flussdiagramms 500, der das Aufbauen und/oder Bewirken des Aufbauens des zweiten Kommunikationspfads 43 auf Seiten der Vorrichtung 1 betrifft.

Wie oben offenbart, umfasst das Aufbauen und/oder Bewirken des Aufbauen des zweiten Kommunikationspfads 43 beispielsweise das Aushandeln und/oder Herstellen und/oder das Unterstützen des Aushandelns und/oder Herstellens einer Netzwerkverbindung über ein oder mehrere Kommunikationsnetzwerke zwischen der Vorrichtung 1 und dem Telematikserver 3. Dies soll beispielsweise so verstanden werden, dass die Vorrichtung 1 und der Telematikserver 3 den zweiten Kommunikationspfads 43 zusammen aufbauen. Dabei kann die Vorrichtung 1 durch die Kennung der Telematikvorrichtung 2 und dem Autorisierungsschlüssel gegenüber dem Telematikserver 3 nachweisen, dass sie zum Aufbau des zweiten Kommunikationspfads zum Empfangen von Telematikinformationen, die von der Telematikvorrichtung 2 stammen, und/oder zum Senden von Nutzfahrzeug-Steuerinformationen, die für Telematikvorrichtung 2 bestimmt sind, berechtigt ist. Diese Berechtigung kann der Telematikserver 3 beispielsweise anhand der von der Telematikvorrichtung 2 empfangenen und in Programmspeicher 31 gespeicherten Kommunikationspfadaufbauinformationen, die beispielsweise die Kennung der Telematikvorrichtung 2 und den Autorisierungsschlüssels enthalten und/oder repräsentieren, prüfen. Mit anderen Worten authentifiziert der Telematikserver 3 die Vorrichtung 1 für den Aufbau des zweiten Kommunikationspfad.

Beispielsweise empfängt der Telematikserver 3 in Schritt 702 von der Vorrichtung 1 eine Kommunikationspfadaufbauanfragenachricht, und bestimmt zumindest teilweise basierend auf dieser Kommunikationspfadaufbauanfragenachricht, ob der zweite Kommunikationspfad 43 aufgebaut werden soll. Wie oben im Zusammenhang mit Schritt 505 des Flussdiagramms 500 offenbart, kann die Kommunikationspfadaufbauanfragenachricht die Kennung der Telematikvorrichtung 2 und den Autorisierungsschlüssel enthalten und/oder zumindest teilweise darauf basieren. Dementsprechend kann der Telematikserver beispielsweise anhand der von der Telematikvorrichtung 2 empfangenen Kommunikationspfadaufbauinformationen, die ebenfalls die Kennung der Telematikvorrichtung 2 und den Autorisierungsschlüssel enthalten und/oder repräsentieren, prüfen, ob die Vorrichtung 1 zum Aufbauen des zweiten Kommunikationspfads 43 berechtigt ist. Zum Beispiel kann vorgegeben sein, dass die Vorrichtung 1 zum Aufbauen des zweiten Kommunikationspfads 43 berechtigt ist, wenn die Kennung der Telematikvorrichtung 2 und der Autorisierungsschlüssel der Kommunikationspfadaufbauinformationen und der Kommunikationspfadaufbauanfragenachricht übereinstimmen. Zum Beispiel wird nur in diesem Fall bestimmt, dass der zweite Kommunikationspfad 43 aufgebaut werden soll. Andernfalls bricht der Telematikserver 3 den Aufbau des zweiten Kommunikationspfads 43 beispielsweise ab.

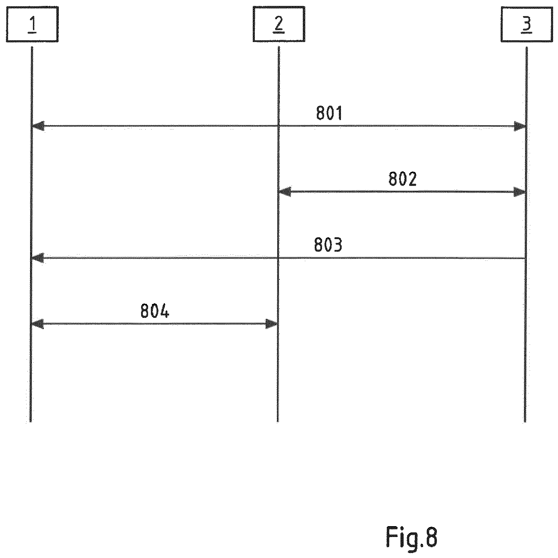

Fig. 8 zeigt eine schematische Darstellung eines Ausführungsbeispiels der Verfahren gemäß den verschiedenen Aspekten der Erfindung. In dem Diagramm 800 sind die Kommunikationsschritte 801 bis 805 zwischen der Vorrichtung 1, der Telematikvorrichtung 2 und dem Telematikserver 3 dargestellt.

In einem Schritt 801 wird der erste Kommunikationspfad (z.B. eine Netzwerkverbindung in einem WLAN-Netzwerk) zwischen der Vorrichtung 1 und der Telematikvorrichtung 2 aufgebaut. Dies entspricht beispielsweise den oben offenbarten Schritt 501 und 601 der Flussdiagramme 500 und 600. Der erste Kommunikationspfad dient beispielsweise dazu, Nutzfahrzeug-Steuerinformationen von der Vorrichtung 1 an die Telematikvorrichtung 2 zu senden und/oder Telematikinformationen von der Telematikvorrichtung 2 an die Vorrichtung 1 zu senden.

In einem Schritt 802 erfolgt beispielsweise auf Seiten der Telematikvorrichtung 2 das Bestimmen der Kommunikationspfadaufbauinformationen. Dieser Schritt 802 korrespondiert beispielsweise zum oben offenbarten Schritt 602 des Flussdiagramms 600. Insbesondere kann der Schritt 802 beispielsweise das Erzeugen des Autorisierungsschlüssels (z.B. eines zufälligen Schlüssels) umfassen.

Anschließend sendet die Telematikvorrichtung die Kommunikationspfadaufbauinformationen an den Telematikserver 3 (Schritt 802) und die Vorrichtung 1 (Schritt 803). Dies entspricht zumindest teilweise den oben offenbarten Schritten 502 und 603 der Flussdiagramme 500 und 600. Hierdurch erhalten sowohl der Telematikserver 3 als auch die Vorrichtung 1 von der Kennung der Telematikvorrichtung 1 und dem Autorisierungsschlüssel Kenntnis und können diese für einen späteren Aufbau des zweiten Kommunikationspfads 43 nutzen. Dementsprechend handelt es sich bei dem Autorisierungsschlüssel um einen sogenannten Pre-Shared Key - also einen vor dem Aufbau des zweiten Kommunikationspfads 43 geteilten Schlüssel.

Wenn der erste Kommunikationspfad 42 anschließend unterbrochen wird, kann die Vorrichtung 1 in einem Schritt 804 den zweiten Kommunikationspfad 43 aufbauen. Hierzu kann sie die in Schritt 803 empfangenen Kommunikationspfadaufbauinformationen (z.B. die Kennung der Telematikvorrichtung 2 und den Autorisierungsschlüssel) nutzen. Der Aufbau des zweiten Kommunikationspfads in Schritt 804 kann wie oben im Detail zu den Schritten 505 und 702 der Flussdiagramme 500 und 700 offenbart ablaufen. Über den zweiten Kommunikationspfad 43 kann die Vorrichtung 1 die gleichen Telematikinformationen empfangen, die sie zuvor über den ersten Kommunikationspfad 42 empfangen hat Hierzu kann die Telematikvorrichtung 2 diese Telematikinformationen an den Telematikserver 3 senden, welcher diese an die Vorrichtung 1 weiterleitet. Auch eine Übertragung von Nutzfahrzeug-Steuerinformationen, z.B. zum Setzen eines Temperatursoll- oder -zielwerts für eine Temperaturregelungskomponente (z.B. eine Kältemaschine) des Sattelaufliegers 40 und/oder zum Steuern einer Schließsystemkomponenten des Sattelaufliegers 40, ist über den zweiten Kommunikationspfad möglich.

Dieser Ablauf ermöglicht somit den Aufbau des zweiten Kommunikationspfads 42 als Rückfall oder "Fallback" Option für den ersten Kommunikationspfad 42, wenn der erste Kommunikationspfad 42 unterbrochen ist. Zu einer solchen Unterbrechung kann es im Falle, dass der erste Kommunikationspfad 42 eine Netzwerkverbindung über ein WLAN-Kommunikationsnetzwerk ist, beispielsweise kommen, wenn sich ein als Vorrichtung 1 verwendetes Mobiltelefon in der Fahrerkabine des Nutzfahrzeugs der Zugmaschine 41 befindet und das WLAN-Signal zwischen Telematikvorrichtung 2 und Vorrichtung 1 für eine Datenübertragung nicht ausreichend ist (z.B. weil die Fahrerkabine das WLAN-signal abschwächt und keine direkte WLAN-Verbindung möglich ist). In diesem Fall wird der zweite Kommunikationspfad als eine APP-Fallbackverbindung aufgebaut. Hierbei kann es sich, wie oben offenbart, um eine internetbasierte Verbindung zwischen der Vorrichtung 1 und dem Telematikserver 3 über ein oder mehrere Kommunikationsnetzwerke handeln. Um einen Schutz einer solchen internetbasierten Verbindung vor unerlaubtem Zugriffen zu ermöglichen, können eine Authentifizierung und eine verschlüsselte Kommunikation vorgesehen sein. Darüber hinaus ist vorteilhaft, dass diese Verbindung ohne Nutzerinteraktion wie Benutzer- oder Passworteingabe möglich ist. Der notwendige Autorisierungsschlüssel kann über den zuvor bestehenden ersten Kommunikationspfad automatisiert ausgetauscht werden. Auch muss der Nutzer vor dem Aufbau des zweiten Kommunikationspfads keine Auswahl der Telematikvorrichtung 2 vornehmen, da die Kennung der Telematikvorrichtung 2 ebenfalls über den zuvor bestehenden ersten Kommunikationspfad automatisiert ausgetauscht werden kann.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Schritte in den einzelnen Flussdiagrammen ist nicht zwingend, alternative Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beidem zur Implementierung der Schritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, ausgeführt durch eine Vorrichtung, das Verfahren umfassend:
- Aufbauen und/oder Bewirken des Aufbauens eines ersten Kommunikationspfads zwischen der Vorrichtung und einer Telematikvorrichtung zum Senden von Nutzfahrzeug-Steuerinformationen und/oder zum Empfangen von Telematikinformationen;
- Empfangen von Kommunikationspfadaufbauinformationen zum Aufbauen eines zweiten Kommunikationspfads von der Telematikvorrichtung über den ersten Kommunikationspfad;
- Bestimmen, ob der erste Kommunikationspfad unterbrochen ist;
- wenn bestimmt wird, dass der erste Kommunikationspfad unterbrochen ist, Aufbauen und/oder Bewirken des Aufbauens des zweiten Kommunikationspfads zum Senden von Nutzfahrzeug-Steuerinformationen und/oder zum Empfangen von Telematikinformationen zumindest teilweise basierend auf den Kommunikationspfadaufbauinformationen.

2. Verfahren nach Anspruch 1, wobei die Kommunikationspfadaufbauinformationen eine Kommunikationspfadauthentisierungsschlüsselinformation und/oder eine Telematikvorrichtungidentifizierungsinformation enthalten oder repräsentieren.

3. Verfahren nach einem der Ansprüche 1 und 2, wobei der zweite Kommunikationspfad zwischen der Vorrichtung und einem Telematikserver aufgebaut wird.

4. Verfahren nach Anspruch 3, wobei das Aufbauen des zweiten Kommunikationspfads zwischen der Vorrichtung und dem Telematikserver umfasst:
- Senden einer Kommunikationspfadaufbauanfragenachricht zumindest teilweise basierend auf der Kommunikationspfadaufbauinformation an den Telematikserver.

5. Verfahren nach einem der Ansprüche 1 bis 4, das Verfahren ferner umfassend:
- Senden der Nutzfahrzeug-Steuerinformationen an den Telematikserver über den zweiten Kommunikationspfad, und/oder
- Empfangen der Telematikinformationen von dem Telematikserver über den zweiten Kommunikationspfad.

6. Verfahren nach einem der Ansprüche 1 bis 5, wobei der Telematikserver eingerichtet ist, von der Telematikvorrichtung über einen dritten Kommunikationspfad empfangene Telematikinformationen über den zweiten Kommunikationspfad an die Vorrichtung zu senden und/oder über den zweiten Kommunikationspfad empfangene Nutzfahrzeug-Steuerinformationen an die Telematikvorrichtung zu senden.

7. Verfahren nach einem der Ansprüche 1 bis 6, wobei der erste Kommunikationspfad eine Verbindung in einem lokalen drahtlosen Kommunikationsnetzwerk umfasst und/oder der zweite und der dritte Kommunikationspfad eine Verbindung in einem zellularen Kommunikationsnetzwerk umfassen.

8. Verfahren nach Anspruch 7, wobei die Telematikvorrichtung einen drahtlosen Zugangspunkt des lokalen drahtlosen Kommunikationsnetzwerks bereitstellt.

9. Verfahren nach einem der Ansprüche 7 und 8, wobei die Datenübertragung über das lokale Kommunikationsnetzwerk gemäß einem der folgenden Kommunikationsstandards erfolgt: WLAN-Kommunikationsstandard, Zigbee-Kommunikationsstandard oder Bluetooth-Kommunikationsstandard; und/oder wobei die Datenübertragung über das zellulare Kommunikationsnetzwerk gemäß einem der folgenden Kommunikationsstandards erfolgt: GPRS, Edge, UMTS, HSPA oder LTE.

10. Vorrichtung, insbesondere ein tragbares Gerät, wobei die Vorrichtung eingerichtet ist zur Ausführung und/oder Steuerung des Verfahrens nach einem der Ansprüche 1 bis 9 oder umfassend jeweilige Mittel zur Ausführung und/oder Steuerung der Schritte des Verfahrens nach einem der Ansprüche 1 bis 9.

11. Verfahren, ausgeführt durch eine Telematikvorrichtung, das Verfahren umfassend:
- Aufbauen und/oder Bewirken des Aufbauens eines ersten Kommunikationspfads zwischen der Telematikvorrichtung und einer Vorrichtung zum Empfangen von Nutzfahrzeug-Steuerinformationen und/oder zum Senden von Telematikinformationen;
- Bestimmen und/oder Empfangen von Kommunikationspfadaufbauinformationen zum Aufbauen eines zweiten Kommunikationspfads durch die Vorrichtung zumindest teilweise basierend auf den Kommunikationspfadaufbauinformationen;
- Senden der Kommunikationspfadaufbauinformationen an die Vorrichtung über den ersten Kommunikationspfad.

12. Verfahren nach Anspruch 11, das Verfahren ferner umfassend:
- Aufbauen und/oder Bewirken des Aufbauens eines dritten Kommunikationspfades zwischen der Telematikvorrichtung und einem Telematikserver;
- Senden der Kommunikationspfadaufbauinformationen an den Telematikserver über den dritten Kommunikationspfad oder Empfangen der Kommunikationspfadaufbauinformationen von dem Telematikserver über den dritten Kommunikationspfad.

13. Telematikvorrichtung, insbesondere eine Telematikvorrichtung für ein Nutzfahrzeug, wobei die Telematikvorrichtung eingerichtet ist zur Ausführung und/oder Steuerung des Verfahrens nach einem der Ansprüche 11 und 12 oder umfassend jeweilige Mittel zur Ausführung und/oder Steuern der Schritte des Verfahrens nach einem der Ansprüche 11 und 12.

14. Computerprogramm, umfassend Programmanweisungen, die dazu ausgebildet sind, bei Ausführung durch mindestens einen Prozessor eine Vorrichtung zu veranlassen, das Verfahren nach einem der Ansprüche 1 bis 9 oder nach einem der Ansprüche 11 und 12 auszuführen.

15. System, umfassend:
- Vorrichtung, insbesondere ein tragbares Gerät, nach Anspruch 10.
- Telematikvorrichtung, insbesondere eine Telematikvorrichtung für ein Nutzfahrzeug, nach Anspruch 13.
